# EUROPEAN PATENT SPECIFICATION

(11) **EP 3 895 873 B1**
(45) Date of publication and mention of the grant of the patent: **09.08.2023**
(21) Application number: 19895718.5
(22) Date of filing: 12.12.2019
(51) Int. Cl.: B29C 45/76, B29C 45/84

(54) **INJECTION MOLDING MACHINE AND CONTROLLER**
SPRITZGIESSMASCHINE UND STEUERUNG
MACHINE DE MOULAGE PAR INJECTION ET DISPOSITIF DE COMMANDE

(30) Priority: 12.12.2018 JP 2018232270
(43) Date of publication of application: 20.10.2021
(73) Proprietor: Sumitomo Heavy Industries, Ltd., Tokyo 141-6025 (JP)
(72) Inventor: ARITA, Mikio, Yokosuka-shi, Kanagawa 237-8555 (JP); MOGI, Hiroshi, Yokosuka-shi, Kanagawa 237-8555 (JP)
(74) Representative: Louis Pöhlau Lohrentz
(86) International application number: PCT/JP2019/048733
(87) International publication number: WO 2020/122187

(56) References cited:
- WO-A1-2011/061828
- JP-A- H09 282 002
- JP-A- 2000 127 236
- JP-A- 2002 052 591
- JP-A- 2005 131 914
- US-B1- 6 572 797
- US-B2- 9 678 900

## Description

### Technical Field

The present invention relates to an injection molding machine or the like.

### Background Art

For example, an industrial machine such as an injection molding machine is known (for example, refer to PTL 1 or the like) . PTL 2 discloses a method of controlling operation of an injection molding system. PTL 3 discloses a failure detection technique of an interrupt signal system configured to give an instruction to interrupt a central processing unit on the basis of an interrupt request. PTL 4 discloses an injection blow molding machine for continuously blow-molding a container by injection molding a preform. PTL 5 discloses a method for controlling an information processing apparatus and a control program. PTL 6 discloses a master/slave-type controller and a controller for a refrigeration cycle device.

### Citation List

### Patent Literature

[PTL 1] Japanese Unexamined Patent Publication No. 2017-132229
[PTL 2] United States Patent No. 6572797
[PTL 3] United States Patent No. 9678900
[PTL 4] Japanese Unexamined Patent Publication No. 2000-127236
[PTL 5] International Patent Publication No. WO 2011/061828
[PTL 6] Japanese Unexamined Patent Publication No. H09-282002

### Summary of Invention

### Technical Problem

Incidentally, in an industrial machine, for example, an abnormality in the controller (control device) which controls the machine may occur. Therefore, when the abnormality occurs in the controller, an operation of the machine may be restricted or stopped, and work efficiency may decrease. Therefore, even when an abnormality occurs in the controller, it is desirable to suppress a decrease in work efficiency.

Therefore, in view of the above problems, an object of the present invention is to provide a technology capable of suppressing a decrease in work efficiency even when an abnormality occurs in the controller.

### Solution to Problem

In order to achieve the above object, according to one embodiment of the present invention, there is provided an injection molding machine including: a mold clamping unit that clamps a mold unit; an injection unit that fills the mold unit clamped by the mold clamping unit with a molding material; an ejector unit that ejects a molding product from the mold unit after the molding material filled by the injection unit is cooled and solidified; and a control device that controls the mold clamping unit, the injection unit, and the ejector unit, and that is configured to conditionally continue a running operation of the injection molding machine even when an abnormality regarding the control device occurs, wherein, when an abnormality occurs in the control device, whether to continue or stop a running operation of the injection molding machine is different for each type of the abnormality.

Moreover, according to another embodiment of the present invention, there is provided a controller for controlling a predetermined machine,
in which the controller repeats predetermined processing for each predetermined processing cycle and corrects an ending timing for each processing cycle so that a reception timing of a signal transmitted for predetermined communication cycle longer than the processing cycle from a high-order controller that is mounted on the predetermined machine and hierarchically adjacent to the controller matches a start timing of the processing cycle.

### Advantageous Effects of Invention

According to the above-described embodiment, it is possible to provide a technology capable of suppressing a decrease in work efficiency even when an abnormality occurs in the controller.

### Brief Description of Drawings

Fig. 1 is a diagram illustrating an example of a configuration of an injection molding system including an injection molding machine.
Fig. 2 is a diagram illustrating an example of the configuration of the injection molding system including the injection molding machine.
Fig. 3 is a diagram illustrating a first example of a configuration of a control device for the injection molding machine.
Fig. 4 is a timing chart illustrating an example of an operation of a controller according to the first example.
Fig. 5 is a diagram illustrating a second example of the configuration of a control device of the injection molding machine.
Fig. 6A is a timing chart illustrating an example of an operation of a controller according to the second example.
Fig. 6B is a timing chart illustrating another example of the operation of the controller according to the second example.
Fig. 6C is a timing chart illustrating still another example of the operation of the controller according to the second example.
Fig. 6D is a timing chart illustrating still another example of the operation of the controller according to the second example.
Fig. 7 is a diagram illustrating a third example of the configuration of the control device of the injection molding machine.
Fig. 8 is a timing chart illustrating an example of an operation of a controller according to the third example.
Fig. 9 is a diagram illustrating a fourth example of the configuration of the control device for the injection molding machine.
Fig. 10A is a timing chart illustrating an example of an operation of a controller according to a comparative example.
Fig. 10B is a timing chart illustrating an example of the operation of the controller according to the fourth example.
Fig. 11 is a diagram illustrating a fifth example of a configuration of a control system of an injection molding machine.
Fig. 12A is a timing chart illustrating an example of an operation of a controller according to a comparative example.
Fig. 12B is a timing chart illustrating an example of an operation of a controller according to the fifth example.

### Description of Embodiments

Hereinafter, embodiments will be described with reference to the drawings.

In the drawings, the same or corresponding configurations are represented by the same or corresponding reference numerals, and description will not be repeated.

### [Outline of Injection Molding System]

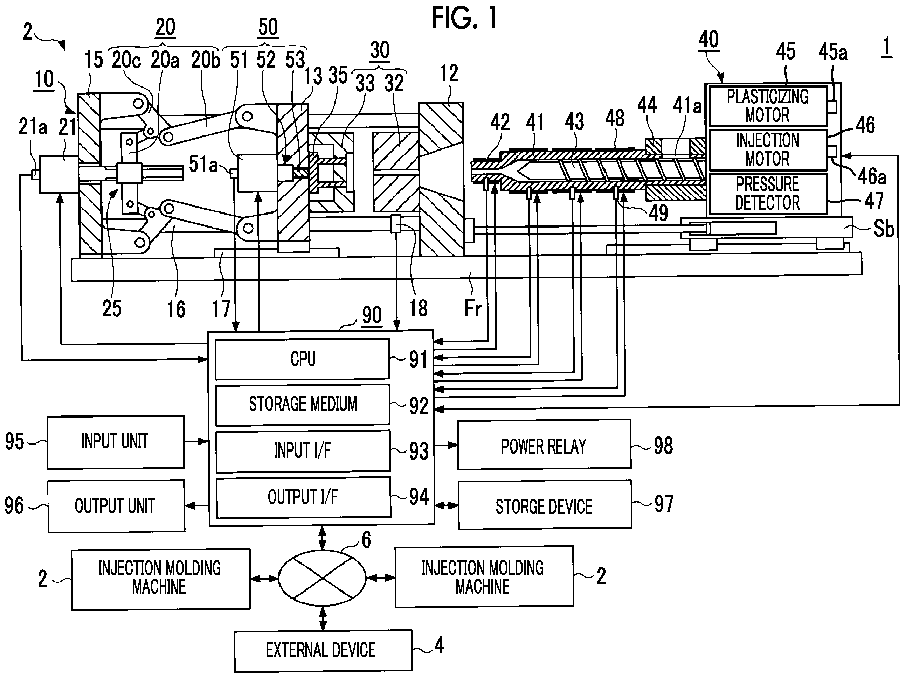

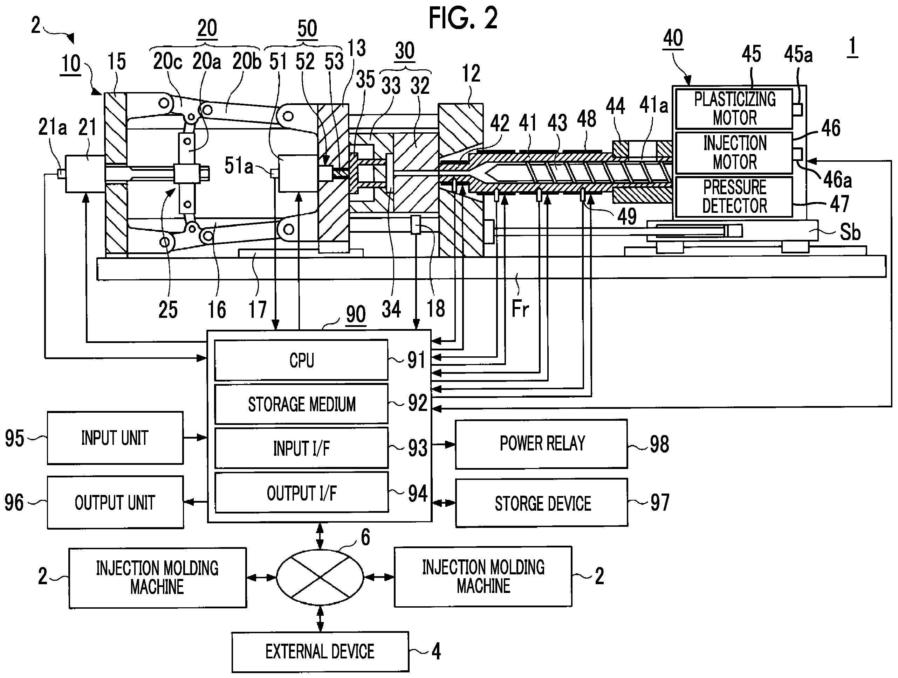

First, an outline of an injection molding system 1 including an injection molding machine 2 will be described referring to Figs. 1 and 2.

Figs. 1 and 2 are diagrams illustrating an example of a configuration of the injection molding system 1 including the injection molding machine 2 according to the present embodiment. Specifically, Fig. 1 illustrates a state at the time of completion of mold opening of the injection molding machine 2, and Fig. 2 illustrates a state at the time of mold clamping of the injection molding machine 2.

The injection molding system 1 includes a plurality of injection molding machines 2, an external device 4, and a communication network 6.

All of the plurality of injection molding machines 2 have the same configuration. For this reason, in Figs. 1 and 2, only detailed configuration of one injection molding machine 2 among the plurality of injection molding machines 2 is illustrated.

Each of the plurality of injection molding machines 2 (an example of a predetermined machine) performs a series of operations for obtaining a molding product.

The plurality of injection molding machines 2 are connected to one another in a bidirectionally communicable manner through the communication network 6. Accordingly, one injection molding machine 2 can acquire various kinds of information, for example, information regarding various settings or information regarding maintenance, such as a program for update, from another injection molding machine 2. For example, one injection molding machine 2 can receive an operation input to the one injection molding machine 2, that is, a remote operation from another injection molding machine 2. Hereinafter, an operation input that is input from the input unit 95 to a control device 90 and an operation input that is input the control device 90 by way of the communication network 6 may be referred to as a "direct operation input" and a "remote operation input" for convenience, respectively. Moreover, the direct operation input and the remote operation input may be generally referred as an "external operation input".

In addition, the plurality of injection molding machines 2 may be connected to one another in a bidirectionally communicable manner, for example, by a daisy-chain system or the like without passing through the communication network 6.

For example, one injection molding machine 2 serving as a master machine may monitor or control an operation of another injection molding machine 2 serving as a slave machine through the communication network 6. Specifically, the injection molding machine 2 (slave machine) may transmit an operation state data to the injection molding machine 2 (master machine) through the communication network 6. As a result, the injection molding machine 2 (master machine) can monitor the operation of another injection molding machine 2 (slave machine). Further, the injection molding machine 2 (master machine) may transmit a control command regarding the operation to another injection molding machine 2 (slave machine) through the communication network 6 while identifying the operation state of another injection molding machine 2 (slave machine) based on the operation state data. Accordingly, the injection molding machine 2 (master machine) can control the operation of another injection molding machine 2 (slave machine).

Moreover, each of the plurality of injection molding machines 2 is connected to the external device 4 in a communicable manner through the communication network 6. Accordingly, each of the injection molding machines 2 can acquire various kinds of information, for example, information regarding various settings or information regarding maintenance, such as a program for update, from the external device 4. In addition, for example, each of the injection molding machines 2 can receive the operation input to the injection molding machine 2, that is, the remote operation input from the external device 4.

The external device 4 is connected to the plurality of injection molding machines 2 in a communicable manner through the communication network 6, and manages each of the injection molding machines 2. For example, the external device 4 is a management terminal or a management server (for example, an edge server) that manages the operation states of the plurality of injection molding machine 2 in a factory. Moreover, for example, the external device 4 may be a management server (so called cloud sever) that is provided outside a factory where the injection molding machines 2 are disposed and manages the plurality of injection molding machines 2 disposed in one factory or distributed in a plurality of factories. In this case, the management server may be an in-house server that is operated by a business operator which owns the injection molding machine 2, or may be a rental server that is used by the business operator. Further, for example, the external device 4 may be a mobile terminal that can be carried by a user or administrator of the injection molding machine 2. For example, the mobile terminal may be a mobile phone, a smartphone, a tablet terminal, a laptop computer terminal, or the like.

For example, the external device 4 can identify the operation state of the injection molding machine 2 and manage (monitor) the operation state of the injection molding machine 2 based on the data transmitted (uploaded) from the injection molding machine 2. Further, the external device 4 can perform various diagnoses such as abnormality diagnosis of the injection molding machine 2 based on the identified operation state of the injection molding machine 2.

Further, for example, the external device 4 may transmit control information (for example, information on various setting conditions) on the injection molding machine 2 through the communication network 6. Accordingly, the external device 4 can control the operation of the injection molding machine 2.

For example, the communication network 6 includes an internal local area network (LAN) of a factory or the like where the injection molding machines 2 are provided. Moreover, for example, the communication network 6 may include a wide area network (WAN) passing through a mobile phone network or an Internet network. Further, for example, the communication network 6 may include a mobile communication network having a base station as a terminal. Further, for example, the communication network 6 may include a short-range communication network based on a communication format such as WiFi or Bluetooth (registered trademark).

### [Hardware Configuration of Injection Molding Machine]

Next, a specific hardware configuration of the injection molding machine 2 will be continuously described referring to Figs. 1 and 2.

The injection molding machine 2 includes a frame Fr, a mold clamping unit 10, an injection unit 40, an ejector unit 50, a control device 90, an input unit 95, and an output unit 96.

First, the mold clamping unit 10 and the ejector unit 50 will be described. Hereinafter, in descriptions of the mold clamping unit 10 or the like, a movement direction (specifically, a right direction in Figs. 1 and 2) of a movable platen 13 at the time of mold closing is a front side, and a movement direction (specifically, a left direction in Figs. 1 and 2) of the movable platen 13 at the time of mold opening is a rear side.

The mold clamping unit 10 performs mold closing, mold clamping, and mold opening of a mold unit 30. The mold clamping unit 10 includes a stationary platen 12, a movable platen 13, a support platen 15, a tie bar 16, a toggle mechanism 20, a mold clamping motor 21, and a motion conversion mechanism 25.

The stationary platen 12 is fixed to the frame Fr. A stationary mold 32 is attached to a surface of the stationary platen 12 facing the movable platen 13.

The movable platen 13 is movable along a guide mechanism (for example, a guide rail) 17 placed on the frame Fr, and specifically, is movable forward or rearward with respect to the stationary platen 12. A movable mold 33 is attached to a surface of the movable platen 13 facing the stationary platen 12.

The movable platen 13 is moved forward or rearward with respect to the stationary platen 12, and thus, mold closing, mold clamping, and mold opening are performed. The mold unit 30 includes the stationary mold 32 and the movable mold 33.

The support platen 15 is connected to the stationary platen 12 with a gap and is placed on the frame Fr to be movable in mold opening and closing directions. Moreover, the support platen 15 may be movable along a predetermined guide mechanism placed on the frame Fr. In this case, the guide mechanism of the support platen 15 may be in common with the guide mechanism 17 of the movable platen 13 described above.

Further, in the present embodiment, the stationary platen 12 is fixed to the frame Fr, and the support platen 15 is movable in the mold opening and closing directions with respect to the frame Fr. However, the support platen 15 may be fixed to the frame Fr, and the stationary platen 12 may be movable in the mold opening and closing directions with respect to the frame Fr.

The tie bar 16 connects the stationary platen 12 and the support platen 15 with a gap. The number of tie bars 16 may be plural. The tie bars 16 are parallel to each other in the mold opening and closing directions, and extend according to a mold clamping force. At least one tie bar 16 is provided with a mold clamping force detector 18. For example, the mold clamping force detector 18 is a strain gauge type detector that detects the mold clamping force by detecting strain of the tie bar 16, and a signal indicating a detection result is loaded into the control device 90.

In addition, the mold clamping force detector 18 is not limited to the strain gauge type detector, and may be a piezoelectric type detector, a capacitance type detector, a hydraulic type detector, an electromagnetic type detector, or the like. An attachment position of the mold clamping force detector 18 is not limited to the tie bar 16.

The toggle mechanism 20 moves the movable platen 13 with respect to the stationary platen 12. The toggle mechanism 20 is disposed between the movable platen 13 and the support platen 15. The toggle mechanism 20 includes a crosshead 20a, a pair of link groups, or the like. Each link group has a plurality of links 20b and 20c that are connected to be bendable and stretchable by a pin or the like. One link 20b is oscillatingly attached to the movable platen 13, and the other link 20c is oscillatingly attached to the support platen 15. When the crosshead 20a is moved forward or rearward, the plurality of links 20b and 20c are bent and stretched, and the movable platen 13 is moved forward or rearward with respect to the support platen 15.

The mold clamping motor 21 is attached to the support platen 15, and operates the toggle mechanism 20. The mold clamping motor 21 moves the crosshead 20a forward or rearward. Accordingly, the links 20b and 20c are bent and stretched, and the movable platen 13 is moved forward or rearward.

The motion conversion mechanism 25 converts rotary motion of the mold clamping motor 21 into linear motion and transmits the linear motion to the crosshead 20a. For example, the motion conversion mechanism 25 includes a ball screw mechanism or the like.

An operation of the mold clamping unit 10 is controlled by the control device 90. For example, the control device 90 controls the operation of the mold clamping unit 10 in a mold closing process, a mold clamping process, a mold opening process, or the like.

In the mold closing process, the control device 90 drives the mold clamping motor 21 to move the crosshead 20a forward at a set speed. Accordingly, the movable platen 13 is moved forward, and the movable mold 33 is brought into contact with the stationary mold 32. For example, a position or a speed of the crosshead 20a is detected by an encoder 21a of the mold clamping motor 21, or the like. A signal indicating a detection result is loaded into the control device 90.

In the mold clamping process, the control device 90 further drives the mold clamping motor 21 to further move the crosshead 20a forward to a set position, thereby generating mold clamping force. A cavity space 34 is formed between the movable mold 33 and the stationary mold 32 during mold clamping, and the cavity space 34 is filled with a liquid molding material. The filled molding material is solidified, whereby a molding product is obtained (produced). The number of cavity spaces 34 may be plural, and in this case, a plurality of molding products are simultaneously obtained (produced).

In the mold opening process, the control device 90 drives the mold clamping motor 21 to move the crosshead 20a rearward at a set speed. Accordingly, the movable platen 13 is moved rearward, and the movable mold 33 is separated from the stationary mold 32.

Moreover, in the present embodiment, the mold clamping unit 10 has the mold clamping motor 21 as a drive source . However, the mold clamping unit 10 may have other power sources, for example, a hydraulic cylinder, instead of or in addition to the mold clamping motor 21. Moreover, for example, the mold clamping unit 10 may have a linear motor as a driving force source for mold opening and closing, and may have an electromagnet as a driving force source for mold clamping.

Further, in the present embodiment, the mold clamping unit 10 is a horizontal type mold clamping unit in which the mold opening and closing directions are a horizontal direction. However, the mold clamping unit 10 may be a vertical type mold clamping unit in which the mold opening and closing directions are a vertical direction.

The ejector unit 50 ejects the molding product from the mold unit 30. The ejector unit 50 has an ejector motor 51, a motion conversion mechanism 52, and an ejector rod 53.

The ejector motor 51 is attached to the movable platen 13. Although the ejector motor 51 is connected to the motion conversion mechanism 52, the ejector motor 51 may be connected to the motion conversion mechanism 52 through a belt, a pulley, or the like.

The motion conversion mechanism 52 converts rotary motion of the ejector motor 51 into linear motion of the ejector rod 53. For example, the motion conversion mechanism 52 includes a ball screw mechanism or the like.

The ejector rod 53 is movable forward or rearward in a through-hole of the movable platen 13. A front end portion of the ejector rod 53 is brought into contact with a movable member 35 that is disposed in the movable mold 33 to be movable forward or rearward. The ejector rod 53 may be connected to the movable member 35.

The operation of the ejector unit 50 is controlled by the control device 90. The control device 90 controls the operation of the ejector unit 50 in an ejection process or the like.

In the ejection process, the control device 90 drives the ejector motor 51 to move the ejector rod 53 forward. Accordingly, the movable member 35 is moved forward, and the molding product is ejected. Thereafter, the control device 90 drives the ejector motor 51 to move the ejector rod 53 rearward, thereby moving the movable member 35 rearward to an original position. For example, a position or a speed of the ejector rod 53 is detected by an encoder 51a of the ejector motor 51. A signal indicating a detection result is sent to the control device 90.

Subsequently, the injection unit 40 will be described. In the description of the injection unit 40, unlike the description of the mold clamping unit 10, a movement direction (the left direction in Figs. 1 and 2) of a screw 43 during filling is a front side, and a movement direction (the right direction in Figs. 1 and 2) of the screw 43 during plasticizing is a rear side.

The injection unit 40 is provided in a slide base Sb that is movable forward or rearward with respect to the frame Fr, and is movable forward or rearward with respect to the mold unit 30. The injection unit 40 touches the mold unit 30, and fills the mold unit 30 with the molding material.

For example, the injection unit 40 has a cylinder 41, a nozzle 42, a screw 43, a cooler 44, a plasticizing motor 45, an injection motor 46, a pressure detector 47, a heater 48, and a temperature measurer 49.

The cylinder 41 heats the molding material fed from a feed port 41a into the cylinder 41. The feed port 41a is formed in a rear portion of the cylinder 41. The cooler 44, such as a water cooling cylinder, is provided on the outer periphery of the rear portion of the cylinder 41. In front of the cooler 44, the heater 48, such as a band heater, and the temperature measurer 49 are provided on the outer periphery of the cylinder 41.

The cylinder 41 is divided into a plurality of zones in an axial direction (that is, a right-left direction in Figs. 1 and 2). The heater 48 and the temperature measurer 49 are provided in each zone of the cylinder 41. The control device 90 performs control on the heater 48 such that a measured temperature of the temperature measurer 49 becomes a set temperature for each zone.

The nozzle 42 is provided in a front end portion of the cylinder 41, and is pressed to the mold unit 30. The heater 48 and the temperature measurer 49 are provided on an outer periphery of the nozzle 42. The control device 90 performs control on the heater 48 such that a measured temperature of the nozzle 42 becomes a set temperature.

The screw 43 is disposed in the cylinder 41 to be rotatable and movable forward or rearward.

The plasticizing motor 45 sends the molding material to the front side along a helical groove of the screw 43 by rotating the screw 43. The molding material is gradually melted by heat from the cylinder 41 while being sent to the front side. As the liquid molding material is sent to the front side of the screw 43 and is accumulated in a front portion of the cylinder 41, the screw 43 is moved rearward.

The injection motor 46 moves the screw 43 forward or rearward. The injection motor 46 injects the liquid molding material accumulated in front of the screw 43 from the cylinder 41 and fills the mold unit 30 with the liquid molding material by moving the screw 43 forward. Thereafter, the injection motor 46 presses the screw 43 to the front side and applies pressure to the molding material in the mold unit 30. Accordingly, a shortage of the molding material can be supplemented. A motion conversion mechanism that converts rotary motion of the injection motor 46 into linear motion of the screw 43 is provided between the injection motor 46 and the screw 43. For example, the motion conversion mechanism includes a ball screw mechanism or the like.

For example, the pressure detector 47 is disposed between the injection motor 46 and the screw 43, and detects pressure by the screw 43 from the molding material, back pressure with respect to the screw 43, or the like. The pressure received by the screw 43 from the molding material corresponds to pressure applied from the screw 43 to the molding material. A signal indicating a detection result of the pressure detector 47 is loaded into the control device 90.

The operation of the injection unit 40 is controlled by the control device 90. The control device 90 controls the operation of the injection unit 40 in a filling process, a holding pressure process, a plasticizing process, or the like.

In the filling process, the control device 90 drives the injection motor 46 to move the screw 43 forward at a set speed and fills the mold unit 30 with the liquid molding material accumulated in front of the screw 43. For example, a position or a speed of the screw 43 is detected by an encoder 46a of the injection motor 46. A signal indicating a detection result is loaded into the control device 90. When the position of the screw 43 reaches a set position, switching (so-called V/P switching) from the filling process to the holding pressure process is performed. A set speed of the screw 43 may be changed according to the position of the screw 43, a time, or the like.

In the filling process, after the position of the screw 43 reaches the set position, the screw 43 may be temporarily stopped at the set position, and subsequently, V/P switching may be performed. Immediately before V/P switching, instead of the screw 43 being stopped, the screw 43 may be moved forward or may be moved rearward at a very slow speed.

In the holding pressure process, the control device 90 drives the injection motor 46 to press the screw 43 forward at a setting pressure and to apply pressure to the molding material in the mold unit 30. Accordingly, a shortage of the molding material can be supplemented. For example, the pressure of the molding material is detected by the pressure detector 47. A signal indicating a detection result is loaded into the control device 90.

In the holding pressure process, the molding material in the mold unit 30 is gradually cooled, and when the holding pressure process is completed, an inlet of the cavity space 34 is closed with a solidified molding material. This state is referred to as a gate seal, and thus, a backflow of the molding material from the cavity space 34 is restrained. After the holding pressure process, a cooling process is started. In the cooling process, solidification of the molding material in the cavity space 34 is performed. In order to shorten a molding cycle, the plasticizing process may be performed during the cooling process.

In the plasticizing process, the control device 90 drives the plasticizing motor 45 to rotate the screw 43 at a set rotation speed and to send the molding material forward along the helical groove of the screw 43. As a result, the molding material is gradually melted. As the liquid molding material is sent in front of the screw 43 and is accumulated in the front portion of the cylinder 41, the screw 43 is moved rearward. For example, the rotation speed of the screw 43 is detected by an encoder 45a of the plasticizing motor 45. A signal indicating a detection result is loaded into the control device 90.

In the plasticizing process, in order to restrict abrupt rearward movement of the screw 43, the control device 90 may drive the injection motor 46 to apply set back pressure to the screw 43. For example, the back pressure with respect to the screw 43 is detected by the pressure detector 47. A signal indicating a detection result is loaded into the control device 90. When the screw 43 is moved rearward to a set position and a predetermined amount of the molding material is accumulated in front of the screw 43, the plasticizing process ends.

Although the injection unit 40 of the present embodiment is an inline and screw type injection unit, the injection unit may be a preplasticizing type injection unit. The preplasticizing type injection unit supplies the molding material melted in a plasticizing cylinder to an injection cylinder and injects the molding material from the injection cylinder into the mold unit. A screw is disposed in the plasticizing cylinder to be rotatable or rotatable and movable forward or rearward, and a plunger is disposed in the injection cylinder to be movable forward or rearward.

The control device 90 performs various kinds of control regarding the injection molding machine 2. For example, the control device 90 is mainly constituted by a computer including a Central Processing Unit (CPU) 91, a storage medium 92 such as a main storage device such as a Random Access Memory (RAM), a Read Only Memory (ROM), or a non-volatile auxiliary storage device, an input interface 93, and an output interface 94. For example, the control device 90 implements various functions by causing the CPU 91 to execute various programs stored in the storage medium 92. Moreover, the control device 90 receives various external signals, such as a control signal or an information signal, through the input interface 93 and transmits various signals, such as a control signal or an information signal to the outside through the output interface 94.

The input unit 95 allows a user to perform various operation inputs on the injection molding machine 2 and transmits an operation signal according to a user's operation input to the control device 90. For example, the input unit 95 may be an operation unit by hardware including switches, such as buttons, levers, or toggles, a keyboard, or the like or may be an operation unit by software including button icons on an operation screen displayed on the output unit 96 described below. Moreover, for example, the input unit 95 may use a touch panel in order to implement the operation unit by software. In this case, for example, the output unit 96 described below may include a touch panel type display, and may also be used as (a portion of) the input unit 95. The input unit 95 includes a start switch 95a for starting the injection molding machine 2.

The output unit 96 (an example of a display unit) displays various kinds of information under the control of the control device 90. Specifically, the output unit 96 may display various information images according to an external operation input that is input to the control device 90 through the input unit 95. The output unit 96 may display various information images according to an external operation input that is input to the control device 90 through the communication network 6, that is, a remote operation.

For example, the output unit 96 displays information regarding an operation situation of the injection molding machine.

For example, the output unit 96 displays information (that is, information regarding setting state) regarding present states of various settings in the injection molding machine.

For example, the output unit 96 displays an operation screen on which the user performs various operations regarding the injection molding machine 2. In this case, a plurality of operation screens may be prepared and displayed on the output unit 96 according to operation targets, operation contents, or the like, or the operation screens may be switched and displayed or may be displayed in a superimposed manner.

The storage device 97 includes a predetermined storage medium. The storage device 97 is connected to the control device 90 in a communicable manner, and transmits predetermined information stored in the storage medium to the control device 90, for example, according to a control signal from the control device 90 or spontaneously. For example, information regarding maintenance, such as a program for update regarding various functions of the injection molding machine 2 implemented by the control device 90, may be saved in the storage device 97 and may be suitably read to the control device 90.

The storage device 97 may be, for example, a storage device that is attachable to and detachable from the injection molding machine 2 (control device 90), such as a USB memory or a DVD drive into which a DVD medium as a storage medium is inserted. The storage device 97 may be, for example, a storage device to and from which an internal storage medium is attachable and detachable, such as a DVD drive.

The power relay 98 is provided in a power path between a drive unit (hereinafter, simply referred to as a "drive unit of the injection molding machine 2") that is driven to produce the molding product, such as the mold clamping unit 10, the injection unit 40, and the ejector unit 50 described above, and a predetermined commercial power supply. The power relay 98 is turned off in a stopped state of the injection molding machine 2. Then, the power relay 98 is normally turned on when the injection molding machine 2 is started, and the drive unit of the injection molding machine 2 is started. That is, the power relay 98 implements a function (hereinafter, referred to as a "drive function" for convenience) of starting the drive unit of the injection molding machine 2.

For example, the user performs various settings by operating the input unit 95 while viewing the operation screen displayed on the output unit 96. A user's setting (specifically, a new setting or a setting not kept as heretofore) is stored in the storage medium 92 and is read as needed.

### [Operation of Control Device of Injection Molding Machine]

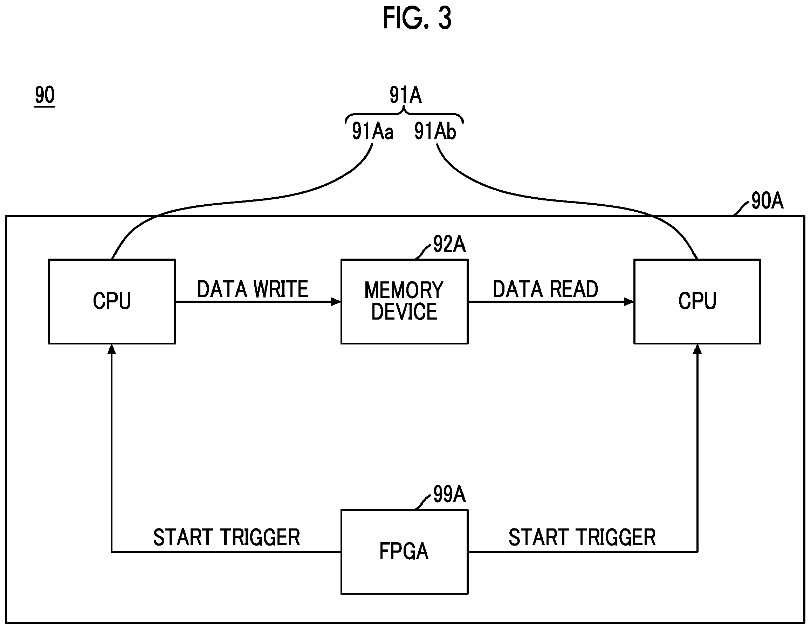

Next, the specific operation of the control device 90 of the injection molding machine 2 will be described with reference to Figs. 3 to 12B.

### <First Example of Control Device>

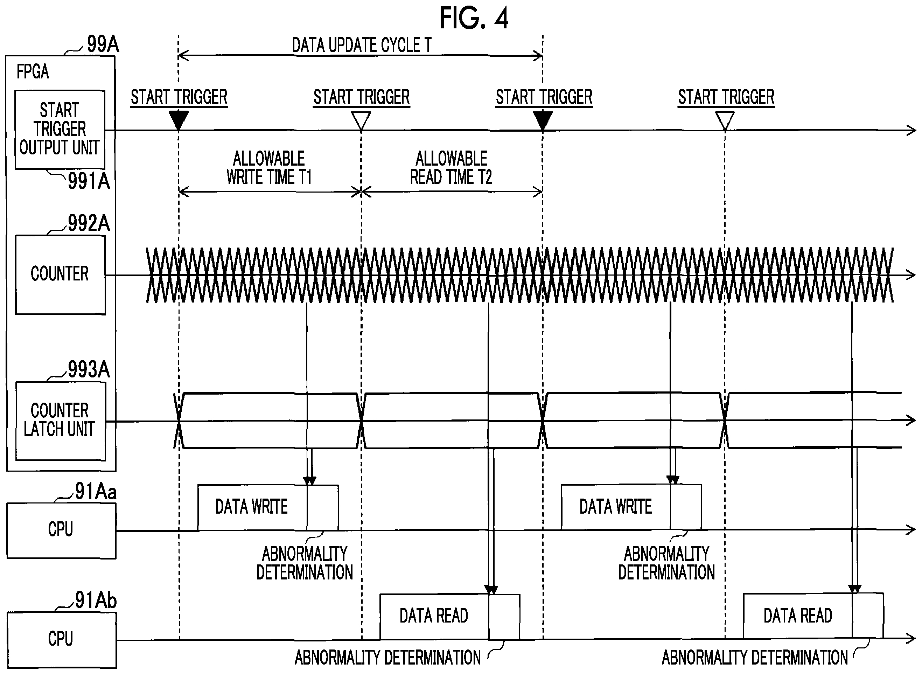

First, the configuration of the control device 90 according to this example will be described with reference to Figs. 3 and 4.

Fig. 3 is a diagram illustrating a first example of the configuration of the control device 90 of the injection molding machine 2 according to the present embodiment. Fig. 4 is a timing chart illustrating an example of the operation of a controller 90A according to this example.

As illustrated in Fig. 3, in this example, the control device 90 includes the controller 90A.

The controller 90A includes two CPUs 91A (an example of a processor), a memory device 92A (an example of a memory), and a Field Programmable Gate Array (FPGA) 99A. Hereinafter, the two CPUs 91A will be described separately as the CPU 91Aa and the CPU 91Ab.

As described above, the CPUs 91Aa and 91Ab realize various processing by starting and executing various programs installed in the storage medium 92 (specifically, the auxiliary storage device) of the controller 90A. In this example, the CPUs 91Aa and 91Ab communicate data regarding the control of the injection molding machine 2. Specifically, the CPU 91Aa writes the data to the memory device 92A, and the CPU 91Ab reads the data written to the memory device 92A, and thus, the communication of the data from the CPU 91Aa to the CPU 91Ab is realized.

Moreover, in this example, the data communication from the CPU 91Aa to the CPU 91Ab is described. However, data communication from the CPU 91Ab to the CPU 91Aa may be performed, and in this case as well, the operation of the controller 90A described later may be applied.

As illustrated in Fig. 4, the FPGA 99A includes a start trigger output unit 991A, a counter 992A, and a counter latch unit 993A.

The start trigger output unit 991A outputs a start trigger for processing (program) regarding data communication from the CPU 91Aa to the CPU 91Ab, that is, an interrupt request to the CPUs 91Aa and 91Ab. Specifically, the start trigger output unit 991A outputs a start trigger of data write processing to the memory device 92A to the CPU 91Aa, and outputs a start trigger of data read processing from the memory device 92A to the CPU 91Ab.

The counter 992A (an example of the timekeeping unit) performs counting (timekeeping) processing by hardware.

The counter latch unit 993A latches (holds) a count value (hereinafter, "counter value") of the counter 992A at the time of output of the start trigger by the start trigger output unit 991A.

Subsequently, a specific operation of the controller 90A according to this example will be described with reference to Fig. 4.

As illustrated in Fig. 4, in this example, data communication from the CPU 91Aa to the CPU 91Ab is performed for each predetermined data update cycle T.

In the data update cycle T, an allowable write time T1 in which the CPU 91Aa is allowed to be used for the data write processing to the memory device 92A and an allowable read time T2 in which the CPU 91Ab is allowed to be used for the data read processing from the memory device 92A are included. The allowable write time T1 corresponds to a period from the output of the start trigger of the write processing to the output of the start trigger of the read processing by the start trigger output unit 991A. The allowable read time T2 corresponds to a period from the output of the start trigger of the read processing to the output of the start trigger of the write processing by the start trigger output unit 991A.

The CPU 91Aa starts a function (program) regarding data write processing to the memory device 92A in response to the start trigger input from FPGA 99A (start trigger output unit 991A), and executes the data write processing.

When the write processing is ended, the CPU 91Aa executes processing (hereinafter, referred to as "abnormality determination processing") of determining whether or not there is an abnormality in communication between the CPU 91Aa and 91Ab.

Specifically, a counter value at the time of output of the start trigger regarding the write processing latched by the counter latch unit 993A and a counter value of the counter 992A at the end of the write processing are acquired from the FPGA 99A. The CPU 91Aa measures a time (hereinafter, referred to as a "required write time") (an example of first required time) required from the output of the start trigger of the write processing to the end of the data write processing due to a difference between the counter value at the time of the output of the start trigger and the counter value at the end of the writing. Then, the CPU 91Aa compares the measured required write time with the allowable write time T1, and when the required write time exceeds the allowable write time T1, determines a communication state between the CPUs 91Aa and 91Ab as an "abnormality". When the required write time exceeds the allowable write time T1, the period of the data write processing by the CPU 91Aa to the memory device 92A is covered by a period of data read processing from the memory device 92A by the CPU 91Ab, for example, there is a possibility that data synchronization may be impaired because the CPU 91Ab reads the data before the write processing.

Further, the CPU 91Ab starts a function (program) regarding the data read processing from the memory device 92A in response to the start trigger input from the FPGA 99A (start trigger output unit 991A), and executes the data read processing.

When the read processing is ended, the CPU 91Ab executes the abnormality determination processing.

Specifically, a counter value at the time of output of the start trigger regarding the read processing latched by the counter latch unit 993A and a counter value of the counter 992A at the end of the read processing are acquired from the FPGA 99A. The CPU 91Ab measures a time (hereinafter, referred to as a "required read time") (an example of second required time) required from the output of the start trigger of the read processing to the completion of the data read processing due to a difference between the counter value at the time of the output of the start trigger and the counter value at the end of the reading. Then, the CPU 91Ab compares the measured required read time with the allowable read time T2, and when the required read time exceeds the allowable read time T2, determines a communication state between the CPUs 91Aa and 91Ab as an "abnormality". When the required read time exceeds the allowable read time T2, the period of the data read processing from the memory device 92A by the CPU 91Ab is covered by the period of data write processing by the CPU 91Aa to the memory device 92A, for example, there is a possibility that the data synchronization may be impaired because the CPU 91Aa rewrites the data of the memory device 92A with new data before the CPU 91Ab completes the data acquisition.

In addition, the CPU 91Ab may write data in the memory device 92A, and the CPU 91Aa may execute periodic data communication from the CPU 91Ab to the CPU 91Aa in a manner of reading the written data. In this case, the controller 90A may execute the same abnormality determination processing as described above for data communication from the CPU 91Ab to the CPU 91Aa. Further, for example, when a plurality of cores are built in at least one of two CPUs 91A, the controller 90A may execute the same abnormality determination processing regarding periodic data communication performed between two cores. Further, the CPUs 91Aa and 91Ab may be replaced with one CPU 91A having the plurality of cores as long as the function of the controller 90A is guaranteed, and in this case as well, the controller 90A may execute the same abnormality determination processing regarding the periodic data communication between the two cores. Further, a plurality of the controllers 90A may be provided, and in this case, at least one of two controllers 90A, or a monitoring controller different from the two controllers 90A may execute the same abnormality determination processing regarding the periodic data communication performed between the two controllers 90A.

When it is determined that there is an abnormality in the communication state between each other by the CPUs 91Aa and 91Ab, the controller 90Anotifies the outside of the injection molding machine 2 that there is an abnormality in the communication (hereinafter, referred to as "internal communication") performed inside the injection molding machine 2.

Moreover, the controller 90A may perform notification regarding the internal communication of the injection molding machine 2 not only when an abnormality in the internal communication of the injection molding machine 2 occurs but also when the internal communication is normal.

For example, the controller 90A performs notification regarding the internal communication of the injection molding machine 2, toward a user around the injection molding machine 2, in a visual way using the output unit 96 (an example of a notification unit) . Further, the controller 90Amay execute the same notification in an auditory method using an audio output unit (an example of the notification unit) such as a speaker or a buzzer mounted on the injection molding machine 2. Thereby, for example, the injection molding machine 2 can notify the user of the injection molding machine 2 of the abnormality of the communication state inside the own machine. Therefore, the user of the injection molding machine 2 can identify the communication state inside the injection molding machine 2, and for example, when the communication state inside the injection molding machine 2 is abnormal, the user of the injection molding machine 2 can take measures such as reviewing setting (for example, an amount of data) regarding the internal communication.

Moreover, the controller 90A may transmit information corresponding to the notification regarding the internal communication of the injection molding machine 2 to another injection molding machine 2 (an example of the external device) or the external device 4, through the communication network 6. Accordingly, for example, the injection molding machine 2 can notify the abnormality of communication inside the injection molding machine 2 of a user of another injection molding machine 2, a worker or an administrator of the external device 4, or the like.

Further, the controller 90A may transmit the information corresponding to the notification regarding the internal communication of the injection molding machine 2 to a mobile terminal (for example, a mobile phone, a smartphone, a tablet terminal, or the like) (an example of the external device) possessed by the user of the inj ection molding machine 2, through a short-range communication module conforming to short-range communication standards such as Bluetooth or WiFi (both are registered trademarks) included in the output interface 94. Accordingly, for example, the controller 90A can notify the abnormality of the internal communication state of the injection molding machine 2, even in a situation where the user is a little away from the injection molding machine 2.

The injection molding machine 2 may perform a notification regarding internal communication other than the state regarding the synchronization of data. For example, the injection molding machine 2 may notify information on the setting state of the communication cycle of the internal communication, information on presence or absence of the communication failure regarding the internal communication and an occurrence location of the communication failure, information on presence or absence of the communication delay in internal communication and a degree of the communication delay, or the like.

Further, the injection molding machine 2 may, in place of or in addition to the information on the internal communication state, notify the outside of information on a state of processing other than the internal communication.

For example, the injection molding machine 2 notifies the outside of the load state of the entire processing inside the own machine or specific partial processing. Specifically, the control device 90 may notify the outside of information on the load state due to the entire processing of the CPU 91 or specific partial processing of the CPU 91.

For example, the injection molding machine 2 (control device 90) notifies the user of information such as a numerical value or a graph representing the load state due to the entire processing of the CPU 91 or the specific partial processing of the CPU 91 through the output unit 96. For example, the numerical value or graph representing the load state may be configured based on a ratio to the maximum allowable load that can be processed by the CPU 91. Accordingly, the user can identify how much processing margin there is. Therefore, for example, the user can consider whether or not it is possible to add a new function to the injection molding machine 2 and expand the current function. Further, for example, the user can consider whether or not it is possible to change setting of operation conditions (for example, shortening a sampling cycle or the like) that affects a processing load of the control device 90.

Further, for example, the injection molding machine 2 (control device 90) may receive an operation input regarding addition of a new function or expansion of a current function from the user through the input unit 95. In this case, the control device 90 may determine whether or not it is possible to add the new function or expand the current function based on the current load state of the entire processing. Further, when receiving the expansion of a specific function, the control device 90 may determine whether or not the expansion of the specific function is possible based on the load state of the processing regarding the specific function. Specifically, the control device 90 may determine whether or not it is possible to add the new function or expand the current function, based on the load state of the entire processing of the CPU 91, an increasing processing load (predicted value) due to the addition of a device (for example, additional sensor, camera, or the like) necessary for adding the new function or expanding the current function, and the maximum allowable load of the CPU 91. Further, the control device 90 may determine whether or not it is possible to expand a specific function based on a load state of processing regarding the specific function of the CPU 91, a processing load (predicted value) that increases with the addition of the device necessary for expanding the specific function, and the maximum allowable load of the CPU 91 assigned to the specific function. Then, the control device 90 may notify the user of a determination result through the output unit 96. Further, for example, the control device 90 may transmit information on the determination result to the user terminal such as the mobile terminal possessed by the user of the injection molding machine 2 to execute the notification through the user terminal. As a result, the injection molding machine 2 (control device 90) can notify the user whether or not the load state of the processing of the inside (CPU 91) is such that the new function can be added or the current function can be expanded. For example, the information on the determination result includes information on whether or not the new function can be added or the current function can be expanded. In addition, the information on the determination result may include at least one of the measured value of the load state of the entire processing of the CPU 91 or the specific processing, information on an absolute amount or an increase amount of an allowable processing load of the CPU 91, the predicted value of the processing load that increases with the addition or expansion of the function, and the like.

Further, for example, the injection molding machine 2 (control device 90) may receive an operation input regarding setting of the operation conditions (for example, sampling cycle) that affects the processing load from the user through the input unit 95. In this case, the control device 90 may determine whether or not a new setting content requested by the user is satisfied, that is, whether or not the setting content matches the maximum allowable load of the CPU 91, based on the current entire processing by the CPU 91 or a load state of specific processing of a setting target. Then, the control device 90 may notify the user of a determination result through the output unit 96. Further, the control device 90 may transmit information on the determination result to the user terminal such as the mobile terminal possessed by the user of the injection molding machine 2 to execute the notification through the user terminal. As a result, the injection molding machine 2 (control device 90) can notify the user whether or not the load state of the processing of the inside (CPU 91) is at a level matching the new setting content requested by the user. For example, the information on the determination result includes information on success or failure of the setting content requested by the user. In addition, the information on the determination result may include at least one of the measured value of the load state of the entire processing of the CPU 91 or the specific processing, the information on an absolute amount or an increase amount of the allowable processing load of the CPU 91, a predicted value of an absolute amount or increase amount of processing load due to a new setting content, and the like.

As described above, in this example, the injection molding machine 2 performs notification regarding the state of the processing performed inside the injection molding machine 2 toward the outside. Specifically, the injection molding machine 2 may perform notification regarding at least one of a state of communication performed inside the injection molding machine 2 and the load state by the entire processing or specific partial processing performed inside the injection molding machine 2.

As a result, the injection molding machine 2 can inform the user or the like of the internal processing state inside the own machine, such as the internal communication state (for example, presence or absence of abnormality) of the own machine and the load state of the processing of the inside.

Further, in this example, in the injection molding machine 2, at least one of the controller 90A, the CPU 91A built in the controller 90A, and the core built in the CPU 91A may be plural. Then, the injection molding machine 2 may perform a notification regarding communication between at least one pair of the two controllers 90A, the two CPUs 91A, and the two cores.

Therefore, specifically, the injection molding machine 2 can notify the user or the like of the internal communication state between the two controllers 90A, between the two CPUs 91, and between the two cores.

Moreover, the injection molding machine 2 may notify the user or the like of the internal communication state between the CPU 91A and the FPGA 99A.

Further, in this example, the injection molding machine 2 monitors a time required for transmission and reception in periodic data communication performed between at least one pair of the two controllers 90A, the two CPUs 91A, and the two cores, and according to a monitoring result, performs a notification regarding data synchronization.

As a result, the injection molding machine 2 can inform the user or the like of the state regarding the data synchronization in the periodic data communication inside the own machine.

Further, in this example, the injection molding machine 2 performs a notification when at least one of a required write time when any one of at least one pair of the two controllers 90A, the two CPUs 91A, and the two cores writes transmission data to the other in the memory device 92A and a required read time when one reads reception data from the other from the memory device 92A exceeds a predetermined allowable time (allowable write time T1 and allowable read time T2).

Therefore, specifically, the injection molding machine 2 can notify the user or the like of an abnormality in the internal communication when the required write time in the internal communication or the required read times exceeds the allowable time.

Further, in this example, the controller 90A monitors a time required for transmission and reception in the periodic data communication performed between at least one pair of the two controllers 90A, the two CPUs 91A, and the two cores.

Accordingly, for example, the controller 90A can determine that the data synchronization may be impaired when the time required for the transmission or reception in the periodic data communication becomes relatively long.

Further, in this example, the controller 90A may monitor whether or not at least one of a required write time from reception of the start trigger by any one of at least one pair of the two controllers 90A, the two CPUs 91A, and the two cores to completion of writing of the transmission data to the other in the memory device 92A and a required read time from reception of the start trigger by the one to completion of the reading of the reception data from the other from the memory device 92Aexceeds a predetermined allowable time (allowable write time T1 and allowable read time T2).

Accordingly, specifically, the controller 90A can monitor the presence or absence of an abnormality in the internal communication depending on whether or not the required write time or the required read time in the periodic data communication exceeds the allowable time.

Further, in this example, the controller 90A measures the required write time and the required read time using the hardware counter 992A.

Accordingly, for example, when a counter by software is used, measurement accuracy may vary due to influences of other software operating on the CPU 91A. However, the controller 90A is not affected by other software and can accurately measure the required write time or the required read time.

Further, in this example, the controller 90A may latch a first count value of the counter 992A at the time of output of the start trigger, acquires a second count value when the writing of the transmission data the memory device 92A is completed or when the reading of the reception data from the memory device 92A is completed, obtains a difference between the first count value and the second count value, and thus, measures the required write time and the required read time.

Thereby, specifically, the controller 90A can measure the required write time and the required read time.

Further, in this example, the controller 90A outputs a signal indicating an abnormality (specifically, a signal for notifying an abnormality to the outside) when at least one of the required write time and the required read time exceeds the allowable time (allowable write time T1 and allowable read time T2) to the outside.

As a result, the controller 90A can notify the outside that there is an abnormality regarding the internal communication of the injection molding machine 2.

### <Second Example of Control Device>

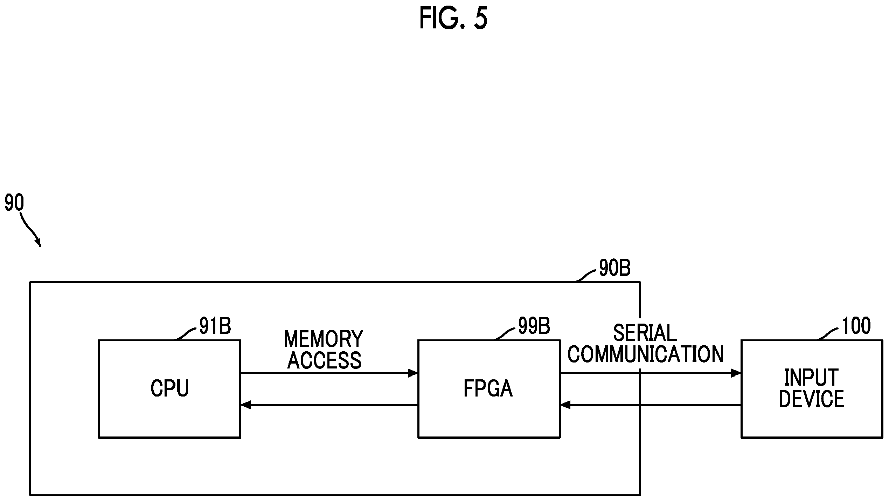

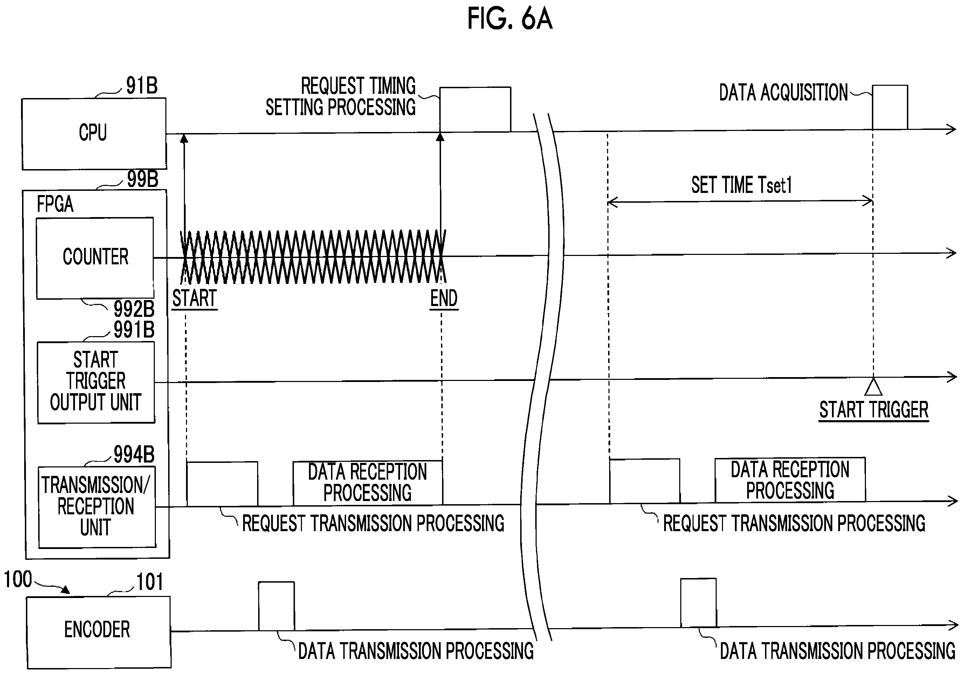

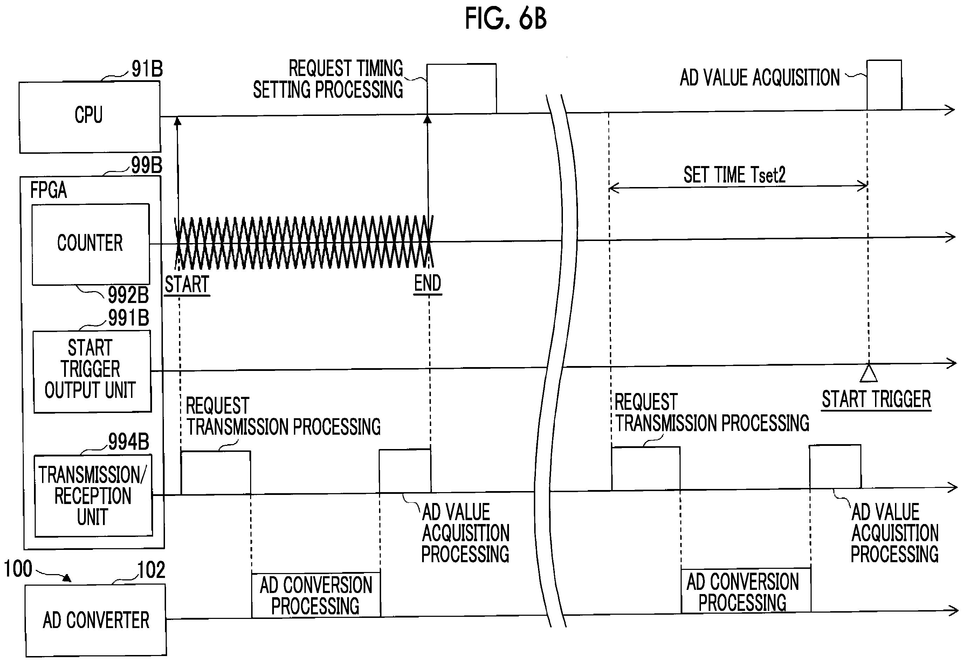

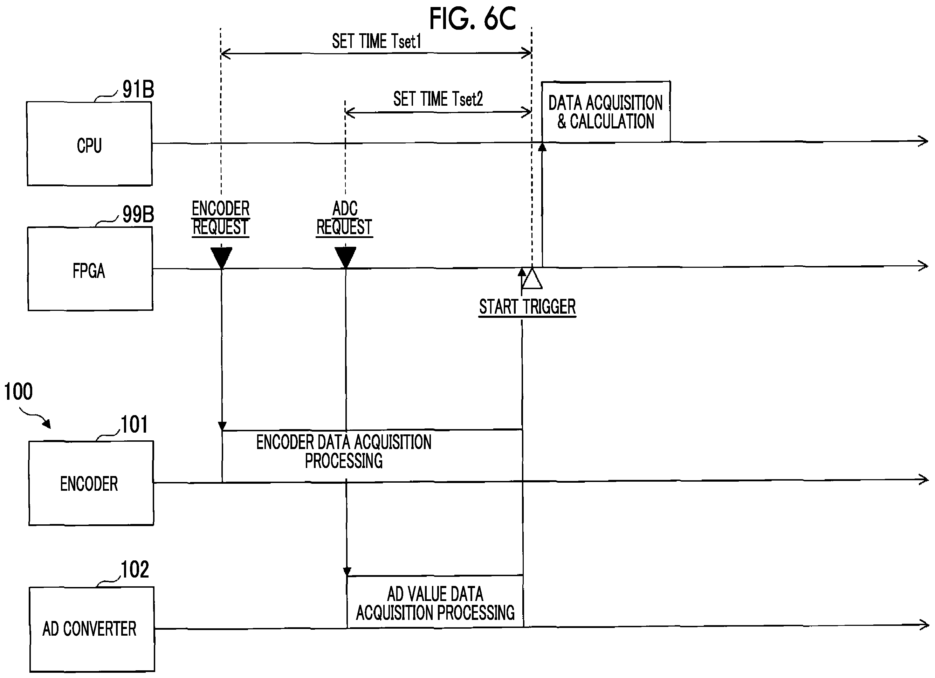

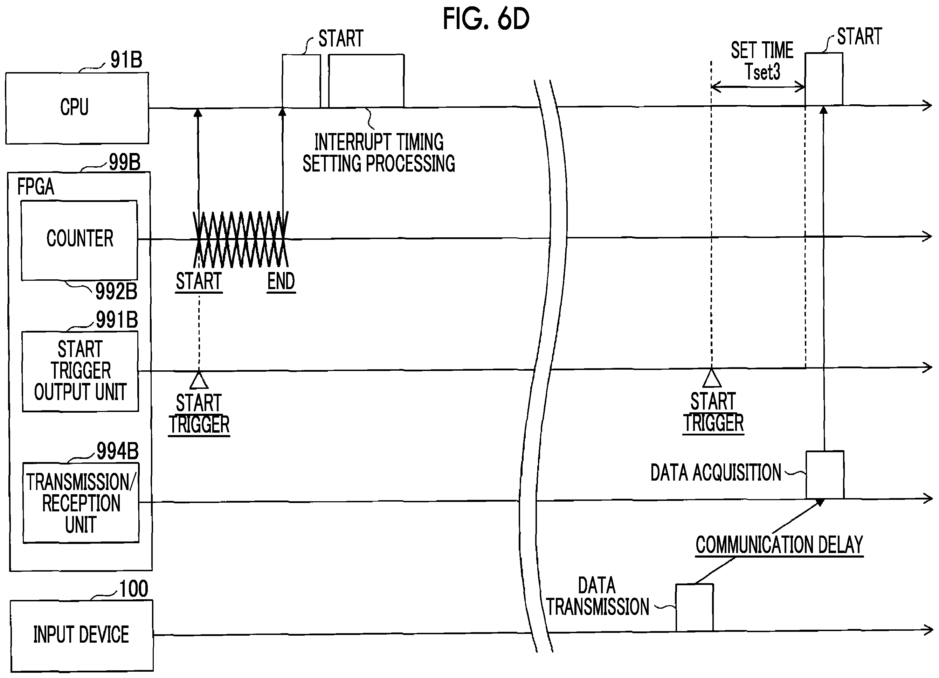

First, a configuration of the control device 90 according to this example will be described with reference to Figs. 5 and 6 (Figs. 6A to 6D).

Fig. 5 is a diagram illustrating a second example of the configuration of the control device 90 of the injection molding machine 2. Fig. 6A is a timing chart illustrating an example of an operation of a controller 90B according to this example. Fig. 6B is a timing chart illustrating another example of the operation of the controller 90B according to this example. Fig. 6C is a timing chart illustrating still another example of the operation of the controller 90B according to this example. Fig. 6D is a timing chart illustrating still another example of the operation of the controller 90B according to this example.

As illustrated in Fig. 5, in this example, the control device 90 includes the controller 90B. Further, the injection molding machine 2 includes an input device 100 as a configuration related to the control device 90.

The controller 90B includes a CPU 91B and an FPGA 99B.

As described above, the CPU 91B (an example of a processor) realizes various processing by starting and executing various programs installed in the storage medium 92 (specifically, the auxiliary storage device) of the controller 90B. In this example, the CPU 91B accesses a memory built in the FPGA 99B and acquires (reads) data (hereinafter, referred to as "input device data") acquired (received) from the input device 100. Further, the CPU 91B performs various control processing regarding the injection molding machine 2 using the input device data acquired from the FPGA 99B.

As illustrated in Fig. 6A or the like, the FPGA 99B includes a start trigger output unit 991B, a counter 992B, and a transmission/reception unit 994B.

The start trigger output unit 991B accesses the memory of the FPGA 99B, acquires input device data, and outputs a start trigger of processing (program) that controls the injection molding machine 2 based on the input device data, that is, an interrupt request to the CPU 91B.

The counter 992B (timekeeping unit) performs counting (timekeeping) processing by hardware in the same manner as the counter 992A.

The transmission/reception unit 994B performs processing for fetching data from the input device 100, specifically, transmission processing of a request for acquiring the input device data, reception processing of input device data, or the like.

The input device 100 acquires various data regarding the injection molding machine 2. Signals are exchanged between the input device 100 and the FPGA 99B of the controller 90B by serial communication. As illustrated in Figs. 6A, 6B, or the like, for example, the input device 100 includes an encoder 101 or an analog-digital (AD) converter 102.

For example, the encoder 101 acquires digital data (hereinafter, referred to as "encoder data") such as a rotation position (rotation angle) of an electric motor used in a drive unit of the injection molding machine 2.

For example, the AD converter 102 outputs data (hereinafter, referred to as "AD value data") of a value obtained by converting an analog signal having a predetermined voltage value of a drive unit of the injection molding machine 2 into a digital signal.

Subsequently, a specific operation of the controller 90B according to this example will be described with reference to Figs. 6A to 6D.

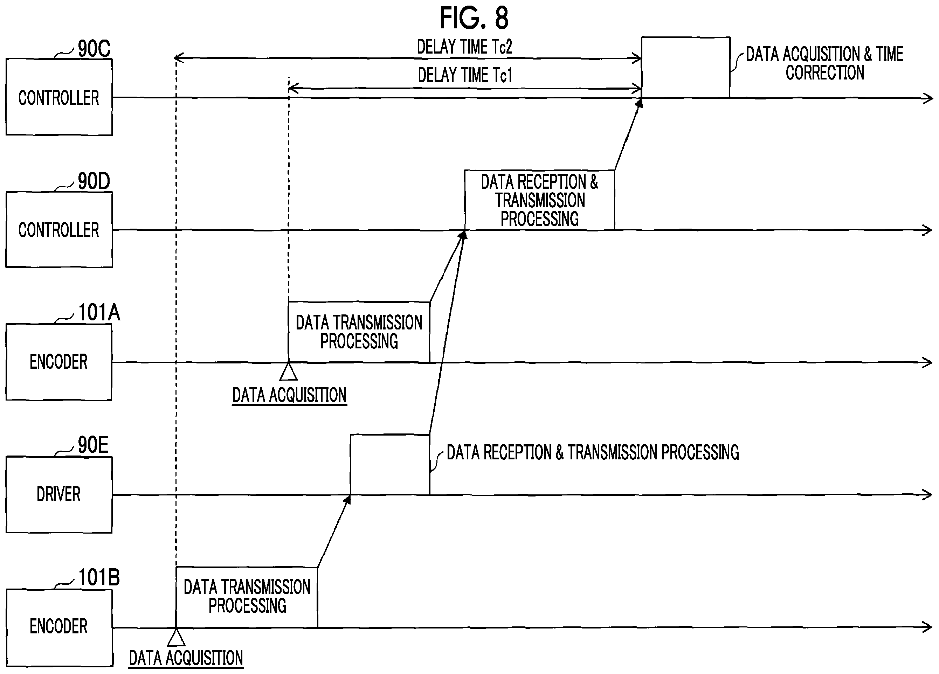

As illustrated in Fig. 6A, the injection molding machine 2 performs processing (hereinafter, referred to as "request timing setting processing") for setting a parameter (set time Tset1 described later) regarding a transmission timing of a request requesting encoder data using the encoder data acquired by the CPU 91B with the encoder 101, before actually performing the control processing regarding the injection molding machine 2. The request timing setting processing may be processing for newly setting the parameter (set time Tset1) in an initial state, or processing for resetting, that is, updating an already set parameter (set time Tset1). Hereinafter, the same may apply to request timing processing of Figs. 6B and 6C or interrupt timing setting processing of Fig. 6D, which will be described later. For example, the request timing setting processing may be executed at the time of start processing of the injection molding machine 2 or at the time of ending processing thereof. When the request timing setting processing is executed at the time of the ending processing, the injection molding machine 2 performs an operation based on a parameter set at the time of the previous ending processing after the next start-up. In this case, the start processing and ending processing of the injection molding machine 2 may include, according to the operation input with respect to the start switch 95a, not only the start processing when all the functions of the injection molding machine 2 start and the corresponding ending processing, but also the start processing when only some functions of the injection molding machine 2 start and the corresponding ending processing. For example, when an update program regarding the control of the injection molding machine 2 is automatically downloaded and automatically installed through the communication network 6, the injection molding machine 2 (control device 90) may start only the functions necessary for installing the update program. Further, the request timing setting processing may be executed every time the injection molding machine 2 starts or ends, or the request timing setting processing may be executed when the injection molding machine 2 starts in a specific start mode for performing the request timing processing (for example, in a factory, at the time of the start processing or at the time of the ending processing). For example, the specific start mode may be a start mode for initializing the injection molding machine 2 in an inspection process or the like before shipping a production line of the injection molding machine 2 or a start mode for performing self-diagnosis, initialization, or the like of the injection molding machine 2 during maintenance of the injection molding machine 2 by an administrator such as a serviceman. Hereinafter, the same may apply to the request timing setting processing of Fig. 6B, the interrupt timing setting processing of Fig. 6D, and delay time setting processing of Fig. 8, which will be described later.

Specifically, the controller 90B previously performs a pre-stage process required for CPU 91B to perform control processing using encoder data, that is, a processing process until the FPGA 99B transmits a request for encoder data to the encoder 101 and receives the encoder data, and measures a time required for the pre-stage process. In this case, the measurement of the required time in the pre-stage process may be performed a plurality of times. Hereinafter, the same may apply to the measurement of the time required for the pre-stage process in the request timing setting processing of Fig. 6B or the interrupt timing setting processing of Fig. 6D. Then, the controller 90B sets a timing for transmitting the request of the encoder data to the encoder 101 based on the measured required time.

More specifically, the transmission/reception unit 994B starts transmission processing (hereinafter, referred to as "request transmission processing") of the request for the encoder data to the encoder 101 and performs reception processing (hereinafter, referred to as "data reception processing") of the encoder data transmitted by the transmission processing (hereinafter, referred to as "data transmission processing") of the encoder 101. In this case, the CPU 91B acquires the counter value of the counter 992B at the time of the start of the request transmission processing and at the time of the end of the data reception processing, and measures the time required for the pre-stage process based on a difference between the counter values. Then, the CPU 91B sets a set time Tset1 until a start timing of the request transmission processing of the FPGA 99A to the encoder 101, that is, a start timing of the request transmission processing retroactively from the start trigger, based on the start trigger corresponding to the control processing using the encoder data. For example, the CPU 91B sets the set time Tset1 by adding a predetermined margin time to the measured required time. As a result, it is not necessary for a designer, a serviceman, or the like to manually set the transmission timing (set time Tset1) of the request based on specifications of the encoder 101, a communication format, or the like at a design step or a maintenance step, and thus, it is possible to improve efficiency of a design process or a maintenance process.

After the set time Tset1 is set by the request timing setting processing, when the control processing regarding the injection molding machine 2 starts actually, the transmission/reception unit 994B starts the request transmission processing at a timing prior to the output timing of the start trigger by the set time Tset1. As a result, the transmission/reception unit 994B completes the acquisition of the encoder data immediately before the start trigger. Therefore, the CPU 91B acquires the latest encoder data in response to the start trigger from the start trigger output unit 991B, and can reflect the latest encoder data to the control processing regarding the injection molding machine 2.

Further, as illustrated in Fig. 6B, the injection molding machine 2 performs request timing setting processing for setting a parameter (set time Tset2 described later) regarding a transmission timing of a request requesting AD value data using the AD value data acquired by the CPU 91B with the AD converter 102, before actually performing the control processing regarding the injection molding machine 2.

Specifically, the controller 90B previously performs a pre-stage process required for CPU 91B to perform the control processing using the AD value data, that is, a processing process until the FPGA 99B transmits the request for the AD value data to the AD converter 102 and receives the AD value data, and measures a time required for the pre-stage process. Then, the controller 90B sets a timing for transmitting the request of the AD value data to the AD converter 102 based on the measured required time.

More specifically, the transmission/reception unit 994B starts request transmission processing of the AD value data to the AD converter 102 and performs acquisition processing (hereinafter, referred to as "AD value acquisition processing") of the AD value data generated by AD conversion processing of the AD converter 102. In this case, as in the case of Fig. 6A, the CPU 91B acquires the counter value of the counter 992B at the time of the start of the request transmission processing and at the time of the end of the AD value acquisition processing, and measures the time required for the pre-stage process based on a difference between the counter values. Then, the CPU 91B sets the set time Tset2 until a start timing of the request transmission processing of the FPGA 99A to the AD converter 102, that is, a start timing of the request transmission processing retroactively from the start trigger, based on the start trigger corresponding to the control processing using the AD value data. For example, the CPU 91B sets the set time Tset2 by adding a predetermined margin time to the measured required time. As a result, the same action/effect as in the case of Fig. 6A is obtained.

After the set time Tset2 is set by the request timing setting processing, when the control processing regarding the injection molding machine 2 actually starts, the transmission/reception unit 994B starts the request transmission processing at a timing prior to the output timing of the start trigger by the set time Tset2. As a result, the transmission/reception unit 994B completes the acquisition of the AD value data immediately before the start trigger. Accordingly, the CPU 91B acquires the latest AD value data in response to the start trigger from the start trigger output unit 991B and reflects the latest AD value data to the control processing regarding the injection molding machine 2.

Further, as illustrated in Fig. 6C, the CPU 91B may perform the control processing (calculation processing) regarding the injection molding machine 2 using data of different input devices 100 (in this example, the encoder 101 and the AD converter 102) . In this case, as described with reference to Figs. 6A and 6B, the timing (set times Tset1 and Tset2) of the request for requesting the input device data is set for each input device 100. As a result, the transmission/reception unit 994B completes the acquisition of all the input device data (encoder data and AD value data) immediately before the start trigger. Therefore, the CPU 91B acquires the latest input device data (encoder data and AD value data) in response to the start trigger from the start trigger output unit 991B, and can reflect the latest input device data to the control processing regarding the injection molding machine 2. That is, even when there is a difference in the time required for the pre-stage process depending on the input device 100, the controller 90B can acquire the latest input device data for all the input devices 100 and execute the control processing based on the latest input device data.

Moreover, in Fig. 6C, for convenience, the request transmission processing by the FPGA 99B (transmission/reception unit 994B), the data transmission processing by the encoder 101, and data reception processing by the FPGA 99B (transmission/reception unit 994B) are collectively described as encoder data acquisition processing in the timing chart of the encoder 101. Further, in Fig. 6C, for convenience, the request transmission processing by the FPGA 99B (transmission/reception unit 994B), the AD conversion processing by the AD converter 102, and AD value acquisition processing by the FPGA 99B (transmission/reception unit 994B) are collectively described as AD value data acquisition processing in the timing chart of the AD converter 102.

Further, as illustrated in Fig. 6D, before the CPU 91B performs the control processing regarding the injection molding machine 2, the injection molding machine 2 actually performs processing (hereinafter, referred to as "interrupt timing setting processing") for setting a parameter (set time Tset3 described later) regarding the output timing of the start trigger (interrupt request) of a program (interrupt handler) corresponding to the control processing.

Specifically, the controller 90B previously performs the pre-stage process necessary for the CPU 91B to perform the control processing regarding the injection molding machine 2, that is, a processing process until the FPGA 99B outputs the start trigger and the interrupt handler starts, and measures the time required for the pre-stage process. Then, the controller 90B sets the timing to output the start trigger based on the measured required time.

More specifically, the start trigger output unit 991B outputs the start trigger to the CPU 91B. In this case, the CPU 91B acquires the counter value of the counter 992B at the time of output of the start trigger and at the time of start (completion) of the interrupt handler, and measures the required time of the pre-stage process based on a difference between the counter values. Then, the CPU 91B sets the set time Tset3 until the output timing of the start trigger by the FPGA 99B (start trigger output unit 991B), that is, the output timing of the start trigger retroactively from the timing when the interrupt handler is to be started, based on the timing (for example, the timing when the acquisition of the latest input device data is completed) when the interrupt handler is to be started. For example, the CPU 91B sets the set time Tset3 by adding a predetermined margin time to the measured required time. As a result, the same action/effect as in the case of Fig. 6A or the like is obtained.

After the set time Tset3 is set by the interrupt timing setting processing, when the control processing regarding the injection molding machine 2 actually starts, the start trigger output unit 991B outputs the start trigger at a timing prior to the timing at which the transmission/reception unit 994B completes the acquisition of the encoder data by the set time Tset3. Accordingly, in the CPU 91B, since the start of the interrupt handler is completed in accordance with the timing when the FPGA 99B completes the acquisition of the encoder data, the CPU 91B can acquire the latest encoder data and reflect the latest encoder data to the control processing regarding the injection molding machine 2.

When the parameter regarding the predetermined processing of the injection molding machine 2 including the request timing setting processing of Figs. 6A and 6B or the interrupt timing setting processing of Fig. 6D is set or updated, for example, the controller 90B may notify (display) the user of the injection molding machine 2 that the injection molding machine 2 is in an operation state related to the setting or updating of the parameter through an output unit 96 (an example of a display unit) or the like. Accordingly, the user of the injection molding machine 2 can recognize that the injection molding machine 2 is in the operation state related to the setting of the parameter.

Moreover, with respect to the display indicating the operation state related to the setting or updating of the parameter of the injection molding machine 2, the controller 90B may have a simple display mode (an example of second display mode) in which the operation state related to the setting or the updating of the parameter is displayed with a simple content, and a detailed display mode (an example of a first display mode) in which the operation state related to the setting or the updating of the parameter is displayed in detail. For example, in the simple display mode, only the setting or updating of the parameter being performed is displayed, and a specific content of the setting of the parameter is not displayed. On the other hand, in the detailed display mode, a specific processing item executed by the setting or updating of the parameter, a processing item currently being executed, or the like may be displayed.

For example, the detailed display mode may be selected when the injection molding machine 2 is used by the user (for example, a worker in charge of setting the parameter before shipping the injection molding machine 2 from the factory, a serviceman who maintains the injection molding machine 2, or the like) corresponding to the administrator of the injection molding machine 2. For example, when the injection molding machine 2 starts, the controller 90B can determine whether or not the user in use is the administrator or a person other than the administrator based on a user ID input through the input unit 95 with a predetermined login screen displayed on the output unit 96. Further, the controller 90B may determine that the user is the administrator when logged in a predetermined administrator mode through the login screen. Accordingly, when the administrator of the injection molding machine 2 needs to identify the operation state of the injection molding machine 2 in detail, the administrator can identify a detailed content of a processing item executed by setting the parameters of the injection molding machine 2 or a progress situation thereof through the detailed display mode.

Further, the input unit 95 may include an operation input unit that generates a flag for starting the setting of the parameter. For example, the operation input unit may be a virtual button icon on a predetermined a graphical user interface (GUI) displayed on the output unit 96, a button switch by hardware, or the like. Accordingly, for example, when the input device 100 is replaced, the user can manually cause the injection molding machine 2 to set the parameter and to reset the timing of the request transmission to the input device 100 described above.

The injection molding machine 2 (control device 90) may automatically perform setting (installation) or updating of a program regarding predetermined processing in place of or in addition to the setting of the parameter regarding the predetermined processing at the time of the start processing or ending processing of the injection molding machine 2. For example, a program for new installation or update may be stored (registered) in the storage device 97 as described above. Further, for example, the program of the new installation or update program may be downloaded from the external device 4.

Further, as in the case of the setting of the parameter, when the program regarding the predetermined processing of the injection molding machine 2 is set or updated, for example, the injection molding machine 2 (control device 90) may notify (display) the user of the injection molding machine 2 through the output unit 96 or the like that the injection molding machine 2 is in an operation state related to the setting or updating of the program. Accordingly, the user of the injection molding machine 2 can recognize that the injection molding machine 2 is in the operation state related to the setting of the program.

Moreover, as in the case of the setting of the parameter, with respect to the display indicating the operation state related to the setting or updating of the program of the injection molding machine 2, the injection molding machine 2 (control device 90) may have a simple display mode in which the operation state related to the setting or the updating of the program is displayed with a simple content, and a detailed display mode in which the operation state related to the setting or the updating of the program is displayed in detail.

Further, the injection molding machine 2 (control device 90) may record log information indicating the parameter or program related to predetermined processing of the injection molding machine 2 (for example, the control device 90, a driver 90E described later, or the like) being set or updated in the storage medium 92, the storage device 97, or the like. As a result, the injection molding machine 2 can hold information on an implementation status of setting or updating of the own machine in a manner that can be confirmed by the user after the fact. For example, the log information includes log information indicating that the setting processing of the parameter has been performed. Further, for example, the log information includes log information indicating that the update processing of the parameter has been performed. Further, for example, the log information includes log information indicating that the setting processing of the program has been performed. Further, for example, the log information includes log information indicating that the update processing of the program has been performed. Further, for example, the log information includes log information indicating that the start processing accompanied by the setting or updating of the injection molding machine 2 has been performed. Further, for example, the log information includes log information indicating that restart processing accompanied by the setting or updating of the injection molding machine 2 has been performed. Further, the log information includes log information indicating that the ending processing accompanied by the setting or updating of the injection molding machine 2 has been performed. For example, the log information includes information representing a time (including date or the like) when each corresponding processing is performed. As a result, the injection molding machine 2 can hold the log information in a manner in which the user can confirm the implementation status of the setting or updating of the own machine in chronological order.

Further, for example, the injection molding machine 2 (control device 90) may display the recorded log information on the output unit 96 (display unit) in response to a predetermined input from the user received by the input unit 95. As a result, the injection molding machine 2 can cause the user to recognize the implementation status of the setting or updating of the own machine. Specifically, the control device 90 may display the log information on the setting processing of the recorded parameter, the update processing of the parameter, the setting processing of the program, the update processing of the program, the start processing accompanied by the setting or updating, the ending processing accompanied by the setting or updating, or the like on the output unit 96 (display unit) in chronological order. For example, the output unit 96 may display the log information side by side in chronological order in a table format under the control of the control device 90. As a result, the injection molding machine 2 can cause the user to recognize the implementation status of the updating or setting of the own machine in chronological order.

As described above, in this example, the injection molding machine 2 provides the user with information on the implementation statuses of the setting and updating of the injection molding machine 2 (own machine) through the output unit 96. Specifically, when the start processing or ending processing of the injection molding machine 2 including automatic setting or automatic updating of the parameter or program regarding predetermined processing is performed under the control of the control device 90, the output unit 96 displays that the injection molding machine 2 is in the operation state related to the setting or updating of the parameter or program.

As a result, the injection molding machine 2 can cause the user to recognize that the injection molding machine 2 is in the operation state related to the setting/updating of the parameter or the program of the own machine.

Further, in this example, the injection molding machine 2 includes a detailed display mode in which relatively more detailed contents regarding the setting or updating of the parameter or the program are displayed on the output unit 96 and a simple display mode in which relatively simpler contents regarding the setting or updating of the parameter and the program are displayed on the output unit 96 when the start processing or the ending processing is performed.

Accordingly, for example, the injection molding machine 2 can switch the display content with a situation where it only needs to tell the user that the parameter or program is set/updated and a situation where it is necessary to inform the user of details such as contents and progress situations of the setting/updating of the parameter or program being performed.

Further, in this example, when the injection molding machine 2 is used by the user corresponding to the administrator, the detailed display mode is selected, and when the injection molding machine 2 is used by the user other than the administrator of the injection molding machine 2, the simple display mode is selected.

As a result, the injection molding machine 2 can switch the display content regarding the setting/updating of the parameter or the program according to authority (whether the user is the administrator or a person other than the administrator) of the user.

Further, in this example, the controller 90B measures a time required for the pre-stage process required for performing the predetermined processing, and automatically sets the parameter regarding predetermined processing to be used after the measurement that based on the measured time.

As a result, the controller 90B can automatically set the parameter regarding the predetermined processing in advance, and thus, the efficiency of a design process or a maintenance process can be improved.

Further, in this example, the controller 90B may measure the time required for the pre-stage process at the time of the start processing or the ending processing of the injection molding machine 2, and automatically set the parameter regarding the predetermined processing based on the measured time.

As a result, the controller 90B can measure the time required for the pre-stage process of the predetermined processing using the timing of the start processing or the ending processing of the injection molding machine 2 and automatically set the parameter.

Further, in this example, the controller 90B may measure the time required for the pre-stage process using the hardware counter 992B.

As a result, for example, when a counter by software is used, measurement accuracy may vary due to the influence of other software operating on the CPU 91B. However, the controller 90B can measure the time required for the pre-stage process without being affected by other software.

Further, in this example, the controller 90B may measure a time required from a time when the controller 90B transmits the request for input device data to the input device 100 to a time when the reception of the input device data from the input device 100 is completed as a pre-stage process of acquisition processing in which the CPU 91B acquires the input device data acquired by the input device 100, and may automatically set the transmission timing of the request based on the above-mentioned acquisition processing as a parameter based on the measured time .

As a result, since the controller 90B can identify the time required for the pre-stage process required as a premise that the acquisition processing is started by the CPU 91B, for example, the controller 90B can automatically set the parameter so that the reception of the input device data can be completed immediately before the acquisition processing. Therefore, the controller 90B can acquire the latest input device data and execute the control processing based on the latest input device data.

Further, in this example, the controller 90B may measure the time required for the pre-stage process for each of the plurality of input devices 100, and automatically set the transmission timing of the request based on the acquisition processing based on the measured time.

As a result, the time required for the pre-stage process may differ for each input device 100, but the controller 90B can automatically set the transmission timing of the request to the input device 100 for each input device 100 in consideration of the time required for the pre-stage process. Therefore, for example, even when the control processing is performed using the input device data of the plurality of input devices 100, the controller 90B can acquire the latest input device data for all the input devices 100 and can execute the control processing based on the latest input device data.

Further, in this example, the controller 90B may perform an interrupt request corresponding to the interrupt handler on the CPU 91B as a pre-stage process of the periodic processing executed by the CPU 91B periodically, measure a time required for starting the interrupt handler in response to the interrupt request, and automatically set the timing of the interrupt request when the timing of the periodic processing defined in advance is used as a reference as a parameter based on the measured time.

As a result, since the controller 90B can identify the time required for the pre-stage process required as a premise that the periodic processing is started by the CPU 91B, for example, the controller 90B can automatically set the parameter so that the start of the interrupt handler can be completed and the periodic processing can be executed at the timing when the periodic processing should be executed.

In this example, Figs. 6A to 6D are illustrated and described as specific operations of the controller 90B, but not all operations need to be adopted, and at least one of the operations may be performed.

### <Third Example of Control Device>

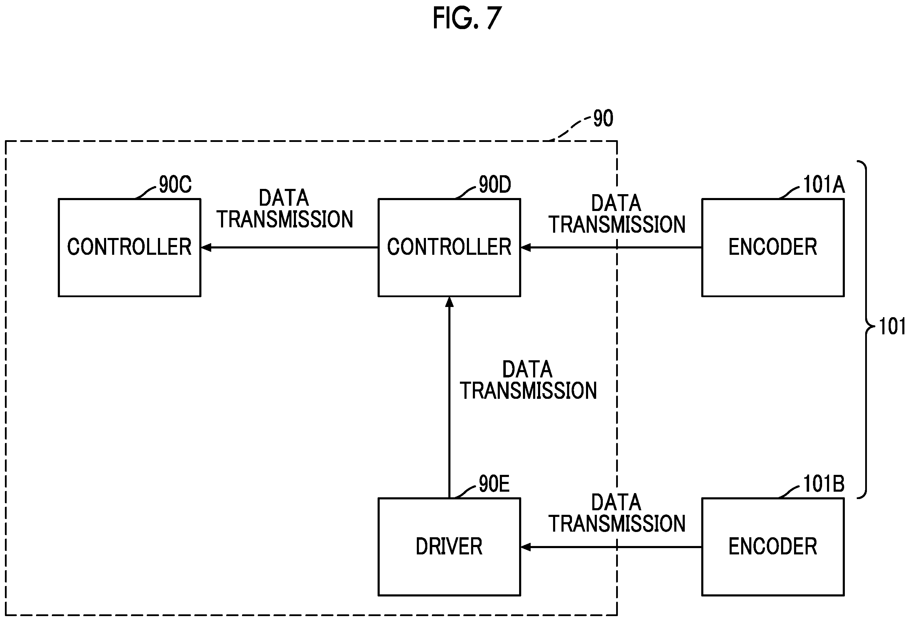

First, a configuration of the control device 90 according to this example will be described with reference to Figs. 7 and 8.

Fig. 7 is a diagram illustrating a third example of the configuration of the control device 90 of the injection molding machine 2 according to the present embodiment. Fig. 8 is a timing chart illustrating an example of an operation of a controller 90C according to this example.

As illustrated in Fig. 7, in this example, the control device 90 includes the controller 90C, a controller 90D, and a driver 90E. Further, the injection molding machine 2 includes two encoders 101 as a configuration related to the control device 90. Hereinafter, the two encoders 101 will be described separately as an encoder 101A and an encoder 101B.

The controllers 90C and 90D each perform control processing regarding the injection molding machine 2. The controllers 90C and 90D are hierarchically connected, the controller 90C is hierarchically positioned higher, and the controller 90D is hierarchically positioned lower. The controller 90D (an example of another device) is connected to an encoder 101A, receives encoder data transmitted from the encoder 101A, and transmits the encoder data received on the high-order controller 90C.

The driver 90E (an example of another device) drives a predetermined drive target (for example, an electric motor or the like) under the control of the controller 90D. Further, the driver 90E is connected to the encoder 101B which has a rotation position of the drive target as a measurement target, receives encoder data from the encoder 101B, and transmits the received encoder data to the high-order controller 90D.

For example, the encoders 101A and 101B acquire digital data (encoder data) such as the rotation position (rotation angle) of the electric motor used in the drive unit of the injection molding machine 2.

The encoder 101A is connected to the controller 90D and transmits the encoder data to the controller 90D using serial communication, for example.

The encoder 101B is connected to the driver 90E which drives an electric motor to be measured, and transmits the encoder data to the driver 90E using serial communication, for example.

Subsequently, a specific operation of the controller 90C according to this example will be described with reference to Fig. 8.

As illustrated in Fig. 8, until the encoder data is acquired by the controller 90C after the encoder data is acquired by the encoder 101A, it takes a certain amount of time depending on the processing by the encoder 101A and the controller 90D, communication delay, or the like. Further, until the encoder data is acquired by the controller 90C after the encoder data is acquired by the encoder 101B, it takes a certain amount of time depending on the processing by the encoder 101B, the driver 90E, and the controller 90D, communication delay, or the like. Therefore, the controller 90C needs to identify the timing when the encoder data is acquired, and when the controller 90C acquires the encoder data, the controller 90C corrects an acquisition time of the encoder data from a time acquired by the controller 90C to a time estimated to be actually acquired by the encoders 101A and 101B. Therefore, before actually performing the control processing regarding the injection molding machine 2, the controller 90C performs processing (hereinafter, referred to as "delay time setting processing") of setting a parameter (delay times Tc1 and Tc2 described later) for correcting the acquisition time of the encoder data using the encoder data of the encoders 101A and 101B. For example, the delay time setting processing may be executed at the time of the start processing or the ending processing of the injection molding machine 2 as described above.

Specifically, the controller 90C previously performs the pre-stage process necessary for the controller 90C to acquire the encoder data, that is, a processing process until the encoder data is received by the controller 90C after the encoder data is acquired by the encoder 101A, and measures the time required for the pre-stage process. In this case, the measurement of the required time in the pre-stage process may be performed a plurality of times. Further, the measurement of the required time in the pre-stage process may be performed by a hardware timekeeping unit (for example, a hardware counter built in the controllers 90C, 90D, or the like) as in the second example described above. Then, the controller 90C sets the delay time Tc1 based on the measured required time. The delay time Tc1 is a parameter for specifying a timing when the encoder data is acquired by the encoder 101A, retroactively from the timing when the encoder data is received by the controller 90C. As a result, when the controller 90C acquires (receives) the encoder data of the encoder 101B, the controller 90C can correct the acquisition time of the encoder data to a time retroactive by the delay time Tc1 from the reception time of the controller 90C.

Moreover, similarly, the controller 90C previously performs the pre-stage process necessary for the controller 90C to acquire the encoder data, that is, a processing process until the encoder data is received by the controller 90C after the encoder data is acquired by the encoder 101B, and measures the time required for the pre-stage process. In this case, the measurement of the required time in the pre-stage process may be performed a plurality of times. Then, the controller 90C sets the delay time Tc2 based on the measured required time. The delay time Tc2 is a parameter for specifying the timing when the encoder data is acquired by the encoder 101B, retroactively from the timing when the encoder data is received by the controller 90C. As a result, when the controller 90C acquires (receives) the encoder data of the encoder 101B, the controller 90C can correct the acquisition time of the encoder data to a time retroactive by the delay time Tc2 from the reception time of the controller 90C.

Further, the controller 90C measures the time required from the acquisition of the encoder data to the reception by the controller 90C for each input device (each of the encoders 101A and 101B), and sets the parameter. Therefore, even when a data transmission channel to the controller 90C is different for each input device (each of the encoders 101A and 101B), the controller 90C appropriately corrects the acquisition time according to the transmission channel.

When the start processing or the ending processing of the injection molding machine 2 including the delay time setting processing is performed, as in the case of the second example described above, for example, the controller 90C may notify (display) the user of the injection molding machine 2 that the injection molding machine 2 is in an operation state related to the setting of the parameter (delay time) through the output unit 96 (an example of a display unit) or the like.

Further, with respect to the display indicating the operation state related to the setting of the parameter of the injection molding machine 2, as in the case of the second example described above, the controller 90C may have a simple display mode in which the operation state related to the setting of the parameter is displayed with a simple content, and a detailed display mode in which the operation state related to the setting of the parameter is displayed in detail. In this case, as in the case of the second example described above, the detailed display mode may be selected when the injection molding machine 2 is used by the user corresponding to the administrator of the injection molding machine 2.

Further, as in the case of the second example described above, the input unit 95 may include an operation input unit that generates a flag for starting the setting of the parameter including the delay time setting processing. As a result, for example, when the encoder 101 is replaced and the data transmission channel is changed, the user causes the injection molding machine 2 to set parameter including the delay time setting processing, and can reset the parameter (delay time) for specifying the timing when the encoder data is acquired by the encoder 101, retroactively from the reception timing of the encoder data.

As in the case of the second example described above, the injection molding machine 2 (control device 90) may automatically perform the setting (installation) or updating of the program regarding the predetermined processing in place of or in addition to the setting of the parameter regarding the predetermined processing at the time of the start processing or ending processing of the injection molding machine 2.

Also, as in the case of the second example described above, when the program regarding the predetermined processing of the injection molding machine 2 is set or updated, for example, the injection molding machine 2 (control device 90) may notify (display) the user of the injection molding machine 2 through the output unit 96 or the like that the injection molding machine 2 is in an operation state related to the setting or updating of the program.

Further, as in the case of the second example described above, with respect to the display indicating the operation state related to the setting or updating of the program of the injection molding machine 2, the injection molding machine 2 (control device 90) may have a simple display mode in which the operation state related to the setting or the updating of the program is displayed with a simple content, and a detailed display mode in which the operation state related to the setting or the updating of the program is displayed in detail.

Further, as in the case of the second example described above, the injection molding machine 2 (control device 90) may record log information indicating setting or updating of the injection molding machine 2 of the parameter, program, or the like regarding the predetermined processing being performed in the storage medium 92, the storage device 97, or the like.

Further, as in the case of the second example described above, for example, the injection molding machine 2 (control device 90) may display the recorded log information on the output unit 96 (display unit) in response to the predetermined input from the user received by the input unit 95. Specifically, the control device 90 may display the log information on the setting processing of the recorded parameter, the update processing of the parameter, the setting processing of the program, the update processing of the program, the start processing accompanied by the setting or updating, the ending processing accompanied by the setting or updating, or the like on the output unit 96 (display unit) in chronological order.

As described above, in this example, the injection molding machine 2 provides the user with information on the implementation statuses of the setting and updating of the injection molding machine 2 (own machine) through the output unit 96. Specifically, when the start processing or ending processing of the injection molding machine 2 including automatic setting or automatic updating of the parameter or program regarding predetermined processing is performed under the control of the control device 90, the output unit 96 displays that the injection molding machine 2 is in the operation state related to the setting or updating of the parameter or program.

As a result, the injection molding machine 2 can cause the user to recognize that the injection molding machine 2 is in the operation state related to the setting/updating of the parameter or the program of the own machine.

Further, in this example, the injection molding machine 2 includes a detailed display mode in which relatively more detailed contents regarding the setting or updating of the parameter or the program are displayed on the output unit 96 and a simple display mode in which relatively simpler contents regarding the setting or updating of the parameter and the program are displayed on the output unit 96 when the start processing or the ending processing is performed.

Accordingly, for example, the injection molding machine 2 can switch the display content with a situation where it only needs to tell the user that the parameter or program is set/updated and a situation where it is necessary to inform the user of details such as contents and progress situations of the setting/updating of the parameter or program being performed.

Further, in this example, when the injection molding machine 2 is used by the user corresponding to the administrator, the detailed display mode is selected, and when the injection molding machine 2 is used by the user other than the administrator of the injection molding machine 2, the simple display mode is selected.

As a result, the injection molding machine 2 can switch the display content regarding the setting/updating of the parameter or the program according to authority (whether the user is the administrator or a person other than the administrator) of the user.

Further, in this example, the controller 90C measures a time required for the pre-stage process required for performing perform the predetermined processing, and automatically sets the parameter regarding the predetermined processing to be used after the measurement based on the measured time.

As a result, the controller 90C can automatically set the parameter regarding the predetermined processing in advance, and thus, the efficiency of a design process or a maintenance process can be improved.

Further, in this example, the controller 90C may measure the time required for the pre-stage process at the time of the start processing or the ending processing of the injection molding machine 2, and automatically set the parameter regarding the predetermined processing based on the measured time.

As a result, the controller 90C can measure the time required for the pre-stage process of the predetermined processing using the timing of the start processing or the ending processing of the injection molding machine 2 and automatically set the parameter.

Further, in this example, the controller 90C may measure the time required for the pre-stage process using a hardware timekeeping unit.

As a result, for example, when the timekeeping unit by software is used, measurement accuracy may vary due to the influence of other software operating on the controller 90C. However, the controller 90C can measure the time required for the pre-stage process without being affected by other software.

Further, in this example, the controller 90C may measure the time required for the pre-stage process until the controller 90C receives the predetermined data via other devices after the input device data is acquired by the input device as a pre-stage process of the reception processing for receiving the input device data input from the input device (encoder 101) connected to the controller 90C via one or more other devices different from the controller 90C. Then, the controller 90C automatically sets the parameter (delay time) for specifying the timing at which the input device data is acquired by the input device, retroactively from the reception timing of the input device data based on the measured time.

As a result, the controller 90C can identify the time required for the pre-stage process until the input device data is received, and thus, can appropriately automatically set the parameter for specifying the timing when the input device data is acquired by the input device.

### <Fourth Example of Control Device>

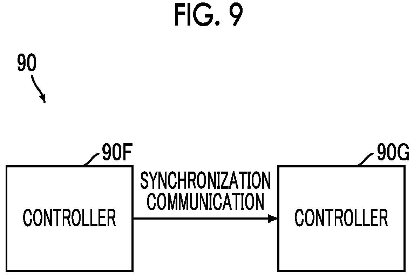

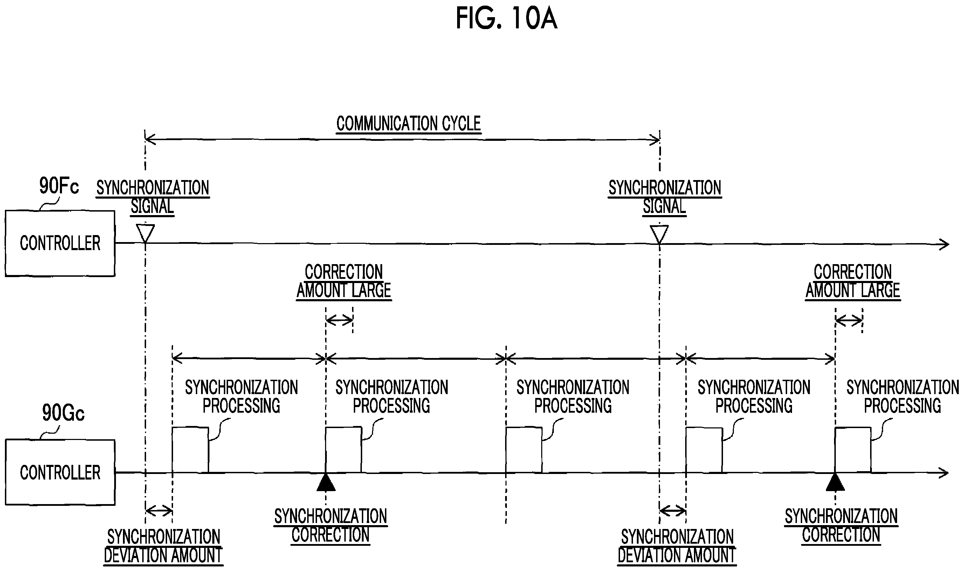

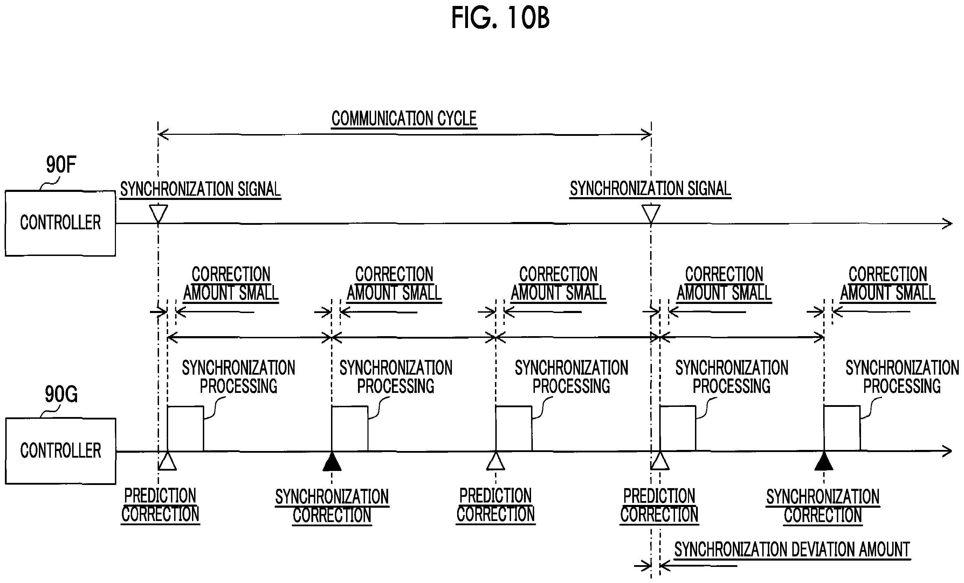

First, a configuration of a control device 90 according to this example will be described with reference to Figs. 9 and 10 (Figs. 10A and 10B).

Fig. 9 is a diagram illustrating a fourth example of the configuration of the control device 90 of the injection molding machine 2 according to the present embodiment. Fig. 10A is a timing chart illustrating an example of operations of controllers 90Fc and 90Gc according to a comparative example. Fig. 10B is a timing chart illustrating an example of operations of controllers 90F and 90G according to this example.

As illustrated in Fig. 9, the control device 90 according to this example includes the controllers 90F and 90G.

The controllers 90F and 90G each perform the control processing regarding the injection molding machine 2. The controllers 90F and 90G are hierarchically connected, the controller 90F is hierarchically positioned higher, and the controller 90G is hierarchically positioned lower.

As illustrated in Fig. 10B, the controller 90F transmits a synchronization signal (an example of a predetermined signal) for each predetermined communication cycle.

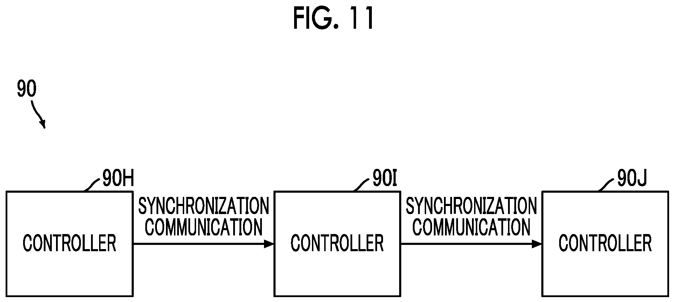

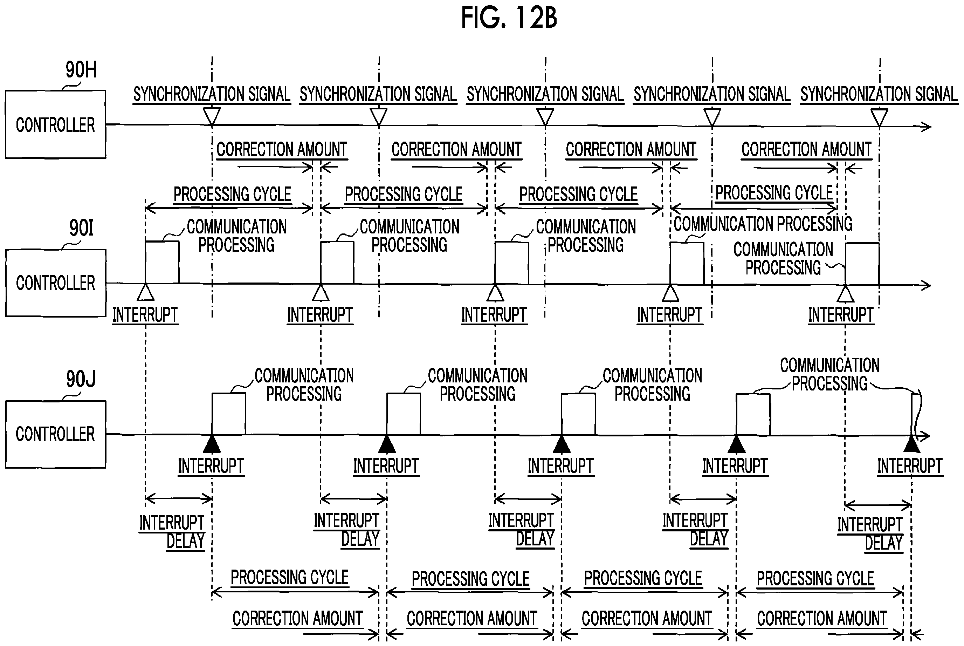

The controller 90G performs predetermined processing for each predetermined processing cycle shorter than the communication cycle of the synchronization signal. Further, the controller 90G corrects an interrupt timing of the processing cycle to synchronize (in this example, match) the interrupt timing of the processing cycle with a reception timing of the synchronization signal received from the controller 90F for each predetermined communication cycle . Even when the communication cycle of the synchronization signal is a multiple of the processing cycle of the controller 90G, clock sources of the controller 90F and the controller 90G are different, and an offset occurs between the reception timing of the synchronization signal and the interrupt timing of the processing cycle. Hereinafter, the same applies to the cases of Figs. 11 and 12B described below.

Subsequently, the operations of the controllers 90Fc and 90Gc according to the comparative example will be described with reference to Fig. 10A.

As illustrated in Fig. 10A, the controller 90Fc transmits the synchronization signal to the controller 90Gc for each predetermined communication cycle, similarly to the controller 90F of this example.

The controller 90Gc repeats predetermined processing for each processing cycle of 1/N (N is a positive integer and, in this example, N=3) of the communication cycle of the synchronization signal. That is, when the controllers 90Fc and 90Gc are synchronized, N processing cycles are included in the communication cycle. Then, like the controller 90G of this example, the controller 90Gc corrects the interrupt timing of the processing cycle to synchronize (in this comparative example, match) the interrupt timing of the processing cycle with a reception timing of the synchronization signal received from the controller 90Fc for each predetermined communication cycle.

Specifically, when the controller 90Gc receives the synchronization signal, the controller 90Gc measures a deviation amount (hereinafter, referred to as a "synchronization deviation amount") from the latest interrupt timing (hereinafter, referred to as "interrupt timing at reception"). Then, the controller 90Gc corrects the interrupt timing (hereinafter, referred to as a "synchronization correction interrupt timing") next to the interrupt timing at reception by the measured synchronization deviation amount. Hereinafter, the correction aspect will be referred to as "synchronization correction". Therefore, of each processing cycle, only the processing cycle from the interrupt timing at reception to the next interrupt timing is a correction target, and for example, processing within the processing cycle of the correction target cannot be completed, which may affect the processing of the processing cycle of the correction target.

Subsequently, operations of the controllers 90F and 90G according to this example will be described with reference to Fig. 10B.

As illustrated in Fig. 10B, the controller 90G repeats predetermined processing every 1/N processing cycle of the synchronization signal, similarly to the controller 90Gc of the comparative example. Then, the controller 90G corrects the interrupt timing of the processing cycle for each processing cycle so that the reception timing of the synchronization signal and the interrupt timing of the processing cycle are synchronized (matched).

Specifically, the controller 90G corrects an interrupt timing (hereinafter, referred to as a "prediction correction interrupt timing") other than the synchronization correction interrupt timing based on a predicted value (hereinafter, referred to as a "predicted synchronization deviation amount") of the synchronization deviation amount between the reception timing of the synchronization signal and the interrupt timing (interrupt timing at reception) of the processing cycle. Hereinafter, the correction aspect will be referred to as a "prediction correction". For example, the controller 90G corrects the prediction correction interrupt timing by a value obtained by dividing a prediction deviation amount by N. Then, when the controller 90G receives the synchronization signal, the controller 90G measures the synchronization deviation amount between the reception timing and the interrupt timing at reception and corrects the synchronization correction interrupt timing by the measured synchronization deviation amount (synchronization correction). As a result, interrupt timings other than the synchronization correction interrupt timing are also corrected step by step, and as illustrated in Fig. 10B, the correction amount of each interrupt timing is relatively small, and thus, so that an influence on the processing of each processing cycle is also relatively small. Therefore, as in the comparative example of Fig. 10A, it is possible to suppress a situation in which only the processing cycle of the target of the synchronization correction is very short and the processing within the processing cycle is affected.

For example, the controller 90G may measure the synchronization deviation amount in advance at a timing when the control processing regarding the injection molding machine 2 is not actually started (for example, at the time of start processing or ending processing of the injection molding machine 2) to calculate the predicted synchronization deviation amount. In this case, the controller 90G may calculate the predicted synchronization deviation amount by measuring the synchronization deviation amount a plurality of times and performing statistical processing. Specifically, the controller 90G may calculate an average value (hereinafter, referred to as an "average synchronization deviation amount") from the synchronization deviation amount measured a plurality of times, and use the average synchronization deviation amount as the predicted synchronization deviation amount. Thereby, the predicted synchronization deviation amount can be specified using the measured value of the actual synchronization deviation amount.

Further, when the synchronization deviation amount between the synchronization signal and the interrupt timing at reception becomes relatively large, specifically, exceeds a synchronization allowable limit value (for example, sum of expected maximum value of synchronization deviation amount and maximum value of jitter), synchronization of the controllers 90F and 90G may be impaired. For example, in the controller 90F, when some abnormalities occur, a self-diagnosis function or the like is used to restart the controller 90F, and thus, the controller 90F may be restarted. In this case, when the controller 90G receives the synchronization signal, for example, the controller 90G limits a correction amount of the synchronization correction interrupt timing to the synchronization allowable limit value (an example of an allowable width). After that, the controller 90G similarly corrects the prediction correction interrupt timing by the synchronization allowable limit value, and secures step by step the synchronization between the reception timing of the synchronization signal and the interrupt timing of the processing cycle. As a result, even when the synchronization of the controllers 90F and 90G is lost, the synchronization can be restored by the stepwise correction of the interrupt timing. That is, in this example, even when an abnormality regarding the control device 90 occurs and the high-order controller 90F is temporarily stopped, the injection molding machine 2 can continue the running operation according to the operation of the controller 90G. In this case, the injection molding machine 2 may be in an aspect of completing at least a series of running operations for manufacturing the molding product. As described above, the series of operations for manufacturing the molding product includes the operations regarding the mold closing process, the mold clamping process, and the mold opening process of the mold clamping unit 10, the operations regarding the filling process, the holding pressure process, the cooling process, and the plasticizing process of the injection unit 40, and an operation regarding an ejection process of the ejector unit 50.

As in the case of the predicted synchronization deviation amount described above, for example, the controller 90G may measure the synchronization deviation amount in advance at the timing when the control processing regarding the injection molding machine 2 is not actually started (for example, at the time of start processing or ending processing of the injection molding machine 2) to set the synchronization allowable limit value. Specifically, the controller 90G extracts the maximum value of the synchronization deviation amount (hereinafter, referred to as a "maximum synchronization deviation amount") from the synchronization deviation amount measured a plurality of times, and calculates a difference between the maximum synchronization deviation amount and the average synchronization deviation amount as a maximum value of jitter (hereinafter, referred to as "maximum jitter"). Then, the controller 90G may set the sum of the extracted maximum synchronization deviation amount and the calculated maximum jitter as the synchronization allowable limit value. Hereinafter, the same applies to a method of setting the synchronization allowable limit value in a fifth example (Figs. 11 and 12B) described later.

The abnormality regarding the control device 90 includes an internal abnormality of the control device 90. The internal abnormality of the control device 90 includes an abnormality regarding the hardware (CPU 91, storage medium 92, input interface 93, output interface 94, or the like) constituting the control device 90. For example, the abnormality regarding the hardware constituting the control device 90 includes a state (overload abnormality) in which a voltage or current of the control device 90 (internal substrate) exceeds a predetermined reference. Further, for example, the abnormality regarding the hardware constituting the control device 90 includes a state in which a temperature of the control device 90 (internal substrate) exceeds a predetermined reference (temperature abnormality) . Further, the internal abnormality of the control device 90 includes an abnormality regarding software (program) executed by the control device 90. Further, the abnormality regarding the control device 90 may include an external abnormality which affects the operation of the control device 90. For example, the external abnormality which affects the operation of the control device 90 includes a communication failure (communication abnormality) with the outside. Further, the external abnormality which affects the operation of the control device 90 includes an abnormality of a power supply due to a power failure, an earthquake, or the like. Hereinafter, the same may apply to the fifth example described later.

When the abnormality regarding the control device 90 occurs, whether the injection molding machine 2 continues or stops the running operation may be made different depending on a type of the abnormality.

For example, as described above, even when the abnormality occurs in the high-order controller 90F, the injection molding machine 2 may continue the running operation (specifically, the series of operations for manufacturing the molding product) under the control of the low-order controller 90G. Even when there is an abnormality in the high-order controller 90F, in a case where the low-order controller 90G which controls the operations of various actuators is normal, the injection molding machine 2 can continue an appropriate operation to some extent and does not need to be stopped immediately. Further, for example, even when an overload abnormality or a temperature abnormality occurs in the control device 90, the injection molding machine 2 may continue the running operation. This is because the injection molding machine 2 can continue the normal operation for a certain period of time even when the overload abnormality or the temperature abnormality occurs. Hereinafter, an abnormality of the target for continuing the running operation of the injection molding machine 2 will be referred to as a "continuation target abnormality".

Meanwhile, for example, when an abnormality occurs in the low-order controller 90G for controlling various actuators of the injection molding machine 2, the injection molding machine 2 may stop the running operation. This is because when an abnormality occurs in the low-order controller 90G, the operation of the actuator is directly affected, and the injection molding machine 2 may not be able to continue the normal operation. Further, for example, the injection molding machine 2 may stop the running operation when the control device 90 has a communication abnormality with the outside due to a communication failure with the input device, a disconnection of a communication line, or the like. When the data from the input device (for example, encoder or the like) is not input to the control device 90, the control device 90 cannot appropriately identify a state of a control target (for example, electric motor or the like), and as a result, there is a possibility that the injection molding machine 2 cannot continue the normal operation. Hereinafter, the abnormality of the target for stopping the running operation of the injection molding machine 2 will be referred to as a "stop target abnormality".

Further, when the abnormality (stop target abnormality) regarding the control device 90 occurs, the injection molding machine 2 may stop the operation, and perform at least one of notification to the user regarding the occurrence of the stop target abnormality (that is, the operation of the injection molding machine 2 is stopped due to the occurrence of the abnormality), and recording of various information (hereinafter, referred to as "abnormality occurrence log information") when the stop target abnormality occurs. For example, the notification to the user may be performed by a visual method, an auditory method, or the like through the output unit 96. For example, the abnormality occurrence log information may include information on a time of occurrence of an abnormality, the identification information on the generated abnormality (stop target abnormality), information on the content of the operation of the injection molding machine 2 when an abnormality occurs, information on a current, voltage, temperature, or the like of the control device 90 when an abnormality occurrence, or the like. As a result, according to the notification, the user can recognize the occurrence of the stop target abnormality or the operation stop of the injection molding machine 2 due to the occurrence of the abnormality. In addition, the user can confirm the situation of the control device 90 at that time after the fact from the abnormality occurrence log information recorded in the storage device (for example, the storage medium 92) inside the injection molding machine 2.

Further, when the abnormality (stop target abnormality) regarding the control device 90 occurs, the injection molding machine 2 may temporarily stop the running operation to perform self-diagnosis of the control device 90. Then, the injection molding machine 2 may restart the operation when there is no problem in a diagnosis result, and may maintain the operation in a stopped state when there is a problem in the diagnosis result. As a result, even in a case where the stop target abnormality occurs, the injection molding machine 2 can restart the operation when there is no problem in the self-diagnosis result.

Further, when the abnormality regarding the control device 90 occurs, the injection molding machine 2 may perform the self-diagnosis of the control device 90 while continuing the running operation. Then, the injection molding machine 2 may continue the operation as it is when there is no problem in the diagnosis result, and may stop the operation when there is a problem in the diagnosis result. As a result, the injection molding machine 2 can determine whether or not it is necessary to actually stop the operation while continuing the operation, and can stop the operation only when necessary.

Further, when the abnormality (continuation target abnormality) regarding the control device 90 occurs, the injection molding machine 2 may continue the running operation and repeat the series of operations (molding cycle) for manufacturing the molding product a predetermined number of times, and then, stop the operation. The predetermined number of times may differ depending on a type of the abnormality. As a result, it is possible to improve balance between work efficiency of the injection molding machine 2, quality of the molding product, safety of the injection molding machine 2, or the like. In this case, moreover, the injection molding machine 2 may perform at least one of notification to the user regarding the occurrence of the abnormality (operation stop of the injection molding machine 2 due to the abnormality occurrence) and the recording of the abnormality occurrence log information when the abnormality occurs. Accordingly, the user can recognize the operation stop of the injection molding machine 2 due to the abnormality of the control device 90 or can confirm the situation of control device 90 at that time after the fact from the abnormality occurrence log information due to the operation stop of the injection molding machine 2.

Further, when the abnormality (continuation target abnormality) regarding the control device 90 occurs, the injection molding machine 2 may perform at least one of the notification of the occurrence of the abnormality to the user and the recording of the abnormality occurrence log information when the abnormality occurs while continuing the running operation as it is. As a result, the user can recognize that some abnormalities have occurred in the control device 90 even when the injection molding machine 2 continues to operate, or can confirm the situation of the control device 90 at that time from the abnormality occurrence log information.

For example, for each type of the abnormality regarding the control device 90, table information (that is, list) is prepared, in which a content of processing to be executed when the abnormality occurs is defined, and the table information may be registered in the storage medium 92 (specifically, a non-volatile auxiliary storage device or the like) of the control device 90. For example, as described above, the content of the processing to be executed when the abnormality occurs includes whether the injection molding machine 2 is stopped or continued to operate, presence or absence of the notification to the user, presence or absence of the recording of the abnormality occurrence log information, and information on duration (for example, a value for a predetermined number of times the molding cycle is repeated) when the operation continues. As a result, the control device 90 can cause the injection molding machine 2 to perform processing according to the generated abnormality based on the table information.

Further, the injection molding machine 2 (control device 90) may set the content of the processing to be executed when the abnormality occurs for each type of the abnormality regarding the control device 90 in response to a predetermined input from the input unit 95. Thus, for each type of the abnormality of the control device 90, through the input unit 95, the user can manually set whether to stop or continue the operation of the injection molding machine 2 when the abnormality occurs, the presence or absence of the notification to the user, the presence or absence of the recording of the abnormality occurrence log information, or the like. For example, a setting screen for performing the setting may be displayed on the output unit 96 (display unit), and the user may operate the setting screen using the input unit 95 to perform the setting for each type of the abnormality regarding the control device 90. In this case, by rewriting the content of the above-mentioned table information, an input content received from the user may be reflected as the setting content. Further, the setting may be performed via the communication network 6 in response to a predetermined input to the external device 4.

As described above, in this example, the injection molding machine 2 continues the running operation even when the abnormality occurs in the control device 90.

For example, in the injection molding machine 2, when an abnormality occurs in the actuator (for example, electric motor) or a driven portion driven by the actuator, there is a high possibility that the operation of the injection molding machine 2 is affected as it is. Therefore, when the operation of the injection molding machine 2 is continued, there is a possibility that problems may occur from the viewpoint of the quality of the molding product or the safety of the injection molding machine 2.

On the other hand, the abnormality of the control device 90 includes an abnormality capable of continuing to appropriately control the operation of the injection molding machine 2 to some extent. For example, even when some abnormalities occur in the high-order controller 90F, the low-order controller 90G can continue to appropriately control the operation of the actuator based on the control signal from the controller 90F that has already been acquired. Then, the high-order controller 90F can be returned to a normal state and a state synchronized with the low-order controller 90G by being restarted by resetting. Further, for example, in the case of the temperature abnormality or the overload abnormality of the control device 90, the state may be restored from the abnormality state to the normal state by continuously monitoring the state while adopting a control mode or the like that reduces the load without stopping immediately the control device 90. Therefore, in the present embodiment, even when an abnormality occurs in the control device 90, it is possible to suppress a situation in which the injection molding machine 2 suddenly stops. Therefore, the injection molding machine 2 can suppress a decrease in work efficiency.

Further, in this example, the injection molding machine 2 may complete at least a series of running operations for manufacturing a molding product even when an abnormality occurs in the control device 90.

As a result, the injection molding machine 2 does not stop in a half-finished state, and thus, the injection molding machine 2 can avoid unnecessary disposal of the half-finished molding product and reduce the cost.

Further, in this example, the control device 90 includes the plurality of controllers 90F and 90G connected hierarchically. Then, in the injection molding machine 2, even when an abnormality occurs in one controller 90F of the plurality of controllers 90F and 90G, the controller 90G hierarchically lower than the controller 90F continues the running operation.

As a result, in most cases, the low-order controller 90G is in charge of the control processing regarding the specific operation of the injection molding machine 2. Therefore, by continuing the operation of the controller 90G, specifically, the injection molding machine 2 can continue the running operation.

Further, in this example, the high-order controller 90F of the two controllers 90F and 90G having adjacent hierarchies transmits a synchronization signal to the low-order controller 90G for each predetermined communication cycle. Then, the low-order controller 90G repeats the predetermined processing at the predetermined processing cycle, and may correct the interrupt timing of the processing cycle step by step to synchronize the reception timing of the synchronization signal with the interrupt timing of the processing cycle.

As a result, the controller 90G can limit the correction amount at one interrupt timing to a relatively small amount. Therefore, for example, the controller 90G corrects the deviation amount between the reception timing of the synchronization signal and the interrupt timing of the processing cycle by only the correction of one interrupt timing, and can suppress a situation in which the influence on the processing in the processing cycle of the correction target increases.

Further, in this example, the controller 90G may correct the interrupt timing step by step to synchronize the reception timing of the synchronization signal with the interrupt timing of the processing cycle when the synchronization deviation amount between the reception timing of the synchronization signal and the interrupt timing is relatively large.

As a result, for example, even when the controller 90F is restarted after being temporarily stopped and the synchronization between the controller 90G and the controller 90F is lost, the controller 90G can correct the interrupt timing step by step to restore the synchronization.

Further, in this example, the synchronization signal is received for each predetermined communication cycle longer than the processing cycle of the controller 90G, and the controller 90G may correct the interrupt timing for each processing cycle to synchronize the reception timing of the synchronization signal with the interrupt timing of the processing cycle.

As a result, the controller 90G corrects not only the synchronization correction interrupt timing but also other interrupt timings (prediction correction interrupt timing) when a plurality of processing cycles are included in the communication cycle of the synchronization signal. Therefore, since the controller 90G can limit the correction amount of each time to a relatively small amount, it is possible to maintain the synchronization with the controller 90F while suppressing the influence on the processing in each processing cycle.

Further, in this example, the controller 90G may measure the synchronization deviation amount between the reception timing of the synchronization signal and the interrupt timing of the processing cycle in advance, and may automatically correct the correction amount for each processing cycle based on the measured synchronization deviation amount. Then, the controller 90G may correct the interrupt timing for each processing cycle based on the set correction amount.

As a result, it is not necessary to determine the specification of the correction amount at the design step or the maintenance step, and thus, design man-hours and maintenance man-hours can be reduced.

Further, in this example, the controller 90G may limit the correction amount when correcting the interrupt timing for each processing cycle to a predetermined allowable width (for example, a synchronization allowable limit value) or less.

As a result, the controller 90G can limit the correction amount of interrupt timing for each processing cycle even when the synchronization with the controller 90F is impaired, and thus, it is possible to suppress the influence on the processing for each processing cycle.

### <Fifth Example of Control Device>

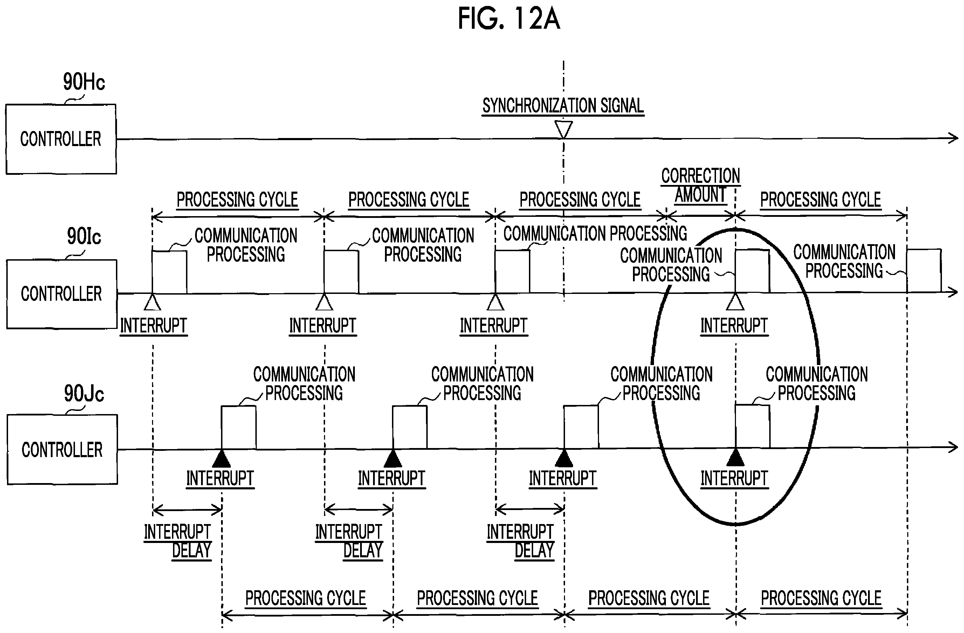

First, a configuration of a control device 90 according to this example will be described with reference to Figs. 11 and 12 (Figs. 12A and 12B).

Fig. 11 is a diagram illustrating a fifth example of the configuration of the control device 90 of the injection molding machine 2 according to the present embodiment. Fig. 12A is a timing chart illustrating an example of operations of controllers 90Hc to 90Jc according to a comparative example. Fig. 12B is a timing chart illustrating an example of operations of controllers 90H to 90J according to this example.

As illustrated in Fig. 11, the control device 90 according to this example includes the controllers 90H to 90J.

The controllers 90H to 90J each perform the control processing regarding the injection molding machine 2. The controllers 90H to 90J are hierarchically connected, the controller 90F is hierarchically positioned at the top, the controller 90I is hierarchically positioned at the middle, and the controller 90G is hierarchically positioned at the bottom.

As illustrated in Fig. 12B, the highest-order controller 90H transmits the synchronization signal to the intermediate controller 90I adjacent to the lower side for each predetermined communication cycle (hereinafter, referred to as an "highest-order communication cycle").

The intermediate controller 90I performs communication processing for transmitting data to the controller 90J in a predetermined processing cycle (hereinafter, referred to as an "intermediate processing cycle"). Further, although not illustrated, the controller 90I transmits a synchronization signal to the lowest-order controller 90J adjacent to the lower side in accordance with the interrupt timing of the intermediate processing cycle. Further, the controller 90I corrects the interrupt timing of the intermediate processing cycle to synchronize (match in this example) the reception timing of the synchronization signal from the controller 90H with the interrupt timing of the intermediate processing cycle.

The lowest-order controller 90J performs communication processing for receiving data from the controller 90I in a predetermined processing cycle (hereinafter, referred to as a "lowest-order processing cycle") . In this case, the controller 90J sets an interrupt delay based on the interrupt timing in the intermediate controller 90I, that is, the reception timing of the synchronization signal from the controller 90I so that the transmission timing of the data by the intermediate controller 90I and the reception timing of the data do not overlap. Further, the controller 90J corrects the timing of the lowest-order processing cycle to synchronize the reception timing of the synchronization signal from the controller 90I with the interrupt timing of the lowest-order processing cycle. Specifically, the controller 90J corrects the timing of the lowest-order processing cycle so that a timing obtained by adding the interrupt delay to the reception timing of the synchronization signal from the controller 90I matches the interrupt timing of the lowest-order processing cycle.

In this example, the highest-order communication cycle, the intermediate processing cycle, and the lowest-order processing cycle are the same.

Subsequently, the operations of the controllers 90Hc to 90Jc according to the comparative example will be described with reference to Fig. 12A.

As illustrated in Fig. 12A, the controller 90Hc transmits a synchronization signal to the intermediate controller 90Ic adjacent to the lower side for each predetermined communication cycle (highest-order communication cycle), similarly to the controller 90H of this example.

Similar to the controller 90I of this example, the intermediate controller 90Ic performs communication processing for transmitting data to the controller 90Jc in a predetermined processing cycle (intermediate processing cycle). Further, although not illustrated, the controller 90Ic transmits a synchronization signal to the lowest-order controller 90Jc adjacent to the lower side in accordance with the interrupt timing of the intermediate processing cycle. Further, the controller 90I corrects the interrupt timing of the intermediate processing cycle to synchronize (match in this comparative example) the reception timing of the synchronization signal from the controller 90Hc with the interrupt timing of the intermediate processing cycle.

Similar to the controller 90J of this example, the lowest-order controller 90Jc performs communication processing for receiving data from the controller 90Ic in a predetermined processing cycle (lowest-order processing cycle) . In this case, the controller 90Jc sets an interrupt delay based on the interrupt timing in the intermediate controller 90Ic, that is, the reception timing of the synchronization signal from the controller 90Ic so that the transmission timing of the data by the intermediate controller 90Ic and the reception timing of the data do not overlap. Further, the controller 90Jc corrects the timing of the lowest-order processing cycle to synchronize the reception timing of the synchronization signal from the controller 90Ic with the interrupt timing of the lowest-order processing. Specifically, the controller 90Jc corrects the timing of the lowest-order processing cycle so that a timing obtained by adding the interrupt delay to the reception timing of the synchronization signal from the controller 90Ic matches the interrupt timing of the lowest-order processing cycle.

Here, for example, when the controller 90Hc stops due to some abnormalities and then returns and restarts the output of the synchronization signal, a large deviation may occur between the synchronization signal from the controller 90Hc and the interrupt timing of the controller 90Ic. In this case, when the controller 90Ic receives the synchronization signal from the controller 90Jc, the controller 90Ic measures the synchronization deviation amount between the reception timing of the synchronization signal and the latest interrupt timing (interrupt timing at reception). Then, the controller 90Ic corrects an interrupt timing (synchronization correction interrupt timing) next to the interrupt timing at reception by the measured synchronization deviation amount. Therefore, in this comparative example, the correction amount becomes large enough to correspond to the interrupt delay set by the controller 90Jc, and the communication processing corresponding to the data transmission by the controller 90Ic and the communication processing corresponding to the data reception by the controller 90Jc overlaps (refer to a portion surrounded by a thick line in the drawing). Therefore, in this comparative example, there is a possibility that the data synchronization between the controllers 90Ic and 90Jc cannot be maintained.

Subsequently, the operations of the controllers 90H to 90J according to this example will be described with reference to Fig. 12B.

In this example, when the intermediate controller 90I receives the synchronization signal from the highest-order controller 90H, the intermediate controller 90I measures the synchronization deviation amount between the reception timing of the synchronization signal and the interrupt timing at reception. Then, when the synchronization deviation amount is a relatively large, specifically, exceeds the synchronization allowable limit value (for example, sum of the maximum value of the expected synchronization deviation amount and the maximum value of the jitter as in the case of the fourth example described above), the controller 90I corrects the interrupt timing of the intermediate processing cycle step by step while limiting the correction amount each time. Further, the controller 90I transmits the synchronization signal to the controller 90J in accordance with the interrupt timing of the corrected intermediate processing cycle. Then, the controller 90J corrects the interrupt timing of the lowest-order processing cycle to synchronize the reception timing of the synchronization signal from the controller 90J with the interrupt timing of the lowest-order processing cycle. As a result, the interrupt timing of the intermediate processing cycle is not significantly corrected unlike the comparative example of Fig. 12A. Therefore, it is possible to suppress the situation in which the communication processing corresponding to the data transmission by the controller 90I and the communication processing corresponding to the data reception by the controller 90J overlap. Further, since the interrupt timing of the lowest-order processing cycle is corrected in accordance with the correction of the interrupt timing of the intermediate processing cycle, the synchronization of the controllers 90H and 90I is restored in a state where the synchronization of the controllers 90I and 90J is maintained. That is, in this example, even when the abnormality regarding the control device 90 occurs and the high-order controller 90H is temporarily stopped, the injection molding machine 2 can continue the running operation according to the operations of the controllers 90I and 90J. In this case, the injection molding machine 2 may have an aspect of completing at least a series of running operations for manufacturing the molding product, as in the case of the fourth example described above.

As in the case of the fourth example described above, when the abnormality regarding the control device 90 is generated, whether the injection molding machine 2 continues or stops the running operation may be made different depending on the type of the abnormality. That is, the injection molding machine 2 may distinguish between the continuation target abnormality and the stop target abnormality for each type of the abnormality regarding the control device 90.

Moreover, as in the fourth example described above, when the abnormality (stop target abnormality) regarding the control device 90 occurs, the injection molding machine 2 may stop the operation, and perform at least one of notification to the user regarding the occurrence of the stop target abnormality (that is, the stop operation of the injection molding machine 2 due to the occurrence of the abnormality), and recording of the abnormality occurrence log information when the stop target abnormality occurs.

Also, as in the fourth example described above, when the abnormality (stop target abnormality) regarding the control device 90 occurs, the injection molding machine 2 may temporarily stop the running operation to perform the self-diagnosis of the control device 90. Then, the injection molding machine 2 may restart the operation when there is no problem in a diagnosis result, and may maintain the operation in a stopped state when there is a problem in the diagnosis result. As a result, even in a case where the stop target abnormality occurs, the injection molding machine 2 can restart the operation when there is no problem in the self-diagnosis result.

Further, as in the case of the fourth example described above, when the abnormality regarding the control device 90 occurs, the injection molding machine 2 may perform the self-diagnosis of the control device 90 while continuing the running operation. Then, the injection molding machine 2 may continue the operation as it is when there is no problem in the diagnosis result, and may stop the operation when there is a problem in the diagnosis result.

Further, as in the case of the fourth example described above, when the abnormality (continuation target abnormality) regarding the control device 90 occurs, the injection molding machine 2 may continue the running operation and repeat the series of operations (molding cycle) for manufacturing the molding product a predetermined number of times, and then, stop the operation. The predetermined number of times may differ depending on a type of the abnormality. In this case, moreover, the injection molding machine 2 may perform at least one of notification to the user regarding the occurrence of the abnormality (operation stop of the injection molding machine 2 due to the abnormality occurrence) and the recording of the abnormality occurrence log information when the abnormality occurs.

Further, as in the case of the fourth example described above, when the abnormality (continuation target abnormality) regarding the control device 90 occurs, the injection molding machine 2 may perform at least one of the notification of the occurrence of the abnormality to the user and the recording of the abnormality occurrence log information when the abnormality occurs while continuing the running operation as it is.

For example, as in the case of the fourth example described above, for each type of the abnormality regarding the control device 90, the table information (that is, list) is prepared, in which the content of processing to be executed when the abnormality occurs is defined, and the table information may be registered in the storage medium 92 (specifically, a non-volatile auxiliary storage device or the like) of the control device 90.

Further, as in the case of the fourth example described above, the injection molding machine 2 (control device 90) may set the content of the processing to be executed when the abnormality occurs for each type of the abnormality regarding the control device 90 in response to the predetermined input from the input unit 95. Further, the setting may be performed via the communication network 6 in response to a predetermined input to the external device 4.

As described above, in this example, the injection molding machine 2 continues the running operation even when the abnormality occurs in the control device 90, as in the case of the fourth example described above.

Thereby, in this example, even when an abnormality occurs in the control device 90, it is possible to suppress a situation in which the injection molding machine 2 suddenly stops. Therefore, the injection molding machine 2 can suppress a decrease in the work efficiency.

Further, in this example, the injection molding machine 2 may complete at least a series of running operations for manufacturing a molding product even when an abnormality occurs in the control device 90.

As a result, the injection molding machine 2 does not stop in a half-finished state, and thus, the injection molding machine 2 can avoid unnecessary disposal of the half-finished molding product and reduce the cost.

Further, in this example, the control device 90 includes the plurality of controllers 90H to 90J connected hierarchically. Then, in the injection molding machine 2, even when an abnormality occurs in one controller 90H of the plurality of controllers 90H to 90J, the controllers 90I and 90J hierarchically lower than the controller 90H continue the running operation.

As a result, in most cases, the relatively low-order controllers 90I and 90J are in charge of the control processing regarding the specific operation of the injection molding machine 2. Therefore, by continuing the operations of the controllers 90I and 90J, specifically, the injection molding machine 2 can continue the running operation.

Further, in this example, the high-order controller 90H of the two controllers 90H and 90I having adjacent hierarchies transmits a synchronization signal to the low-order controller 90I for each predetermined communication cycle. Then, the low-order controller 90I repeats the predetermined processing at the predetermined processing cycle, and may correct the interrupt timing of the processing cycle step by step to synchronize the reception timing of the synchronization signal with the interrupt timing of the processing cycle.

As a result, the controller 90I can limit the correction amount at one interrupt timing to a relatively small amount. Therefore, for example, the controller 90I corrects the deviation amount between the reception timing of the synchronization signal and the interrupt timing of the processing cycle by only the correction of one interrupt timing, and can suppress the situation in which the influence on the processing in the processing cycle of the correction target increases.

Further, in this example, the controller 90I may correct the interrupt timing step by step to synchronize the reception timing of the synchronization signal with the interrupt timing of the processing cycle when the synchronization deviation amount between the reception timing of the synchronization signal and the interrupt timing is relatively large.

As a result, for example, even when the controller 90H is restarted after being temporarily stopped and the synchronization between the controller 90I and the controller 90H is lost, the controller 90I can correct the interrupt timing step by step to restore the synchronization.

Further, in this example, the controller 90I may limit the correction amount when correcting the interrupt timing for each processing cycle to the predetermined allowable width (for example, a synchronization allowable limit value) or less.

As a result, the controller 90I can limit the correction amount of interrupt timing for each processing cycle even when the synchronization with the controller 90H is impaired, and thus, it is possible to suppress the influence on the processing for each processing cycle.

### [Operation of Injection Molding System]

Next, a specific operation of the injection molding system 1 will be described.

As described above, the injection molding system 1 includes the plurality of injection molding machines 2 and the external device 4.

As described above, the external device 4 (an example of the external control device) may transmit the control information to each of the plurality of injection molding machines 2 through the communication network 6 to control the injection molding machine 2 from the outside.

Further, in place of or in addition to the external device 4, one injection molding machine 2 (master machine) (an example of the external control device) of the plurality of injection molding machine 2 may transmit the control information to another injection molding machine 2 through the communication network 6 as described above to control another injection molding machine 2 from the outside.

### <First Example of Operation of Injection Molding System>

In this example, the injection molding system 1 performs notification regarding a state of processing performed in the injection molding system 1 toward the outside, as in the case of the injection molding machine 2 (first example of the operation of the control device 90) described above. For example, the notification may be performed through an output unit (for example, display unit, a sound output unit, or the like) provided in the external device 4. Accordingly, the injection molding system 1 can notify the administrator or worker or the like of the external device 4 of the state of the processing performed during the injection molding system 1. Further, for example, the notification may be performed through the output unit 96 (for example, a display unit, a sound output unit, or the like) of the injection molding machine 2. As a result, the injection molding system 1 can notify the user of the injection molding machine 2 of the state of the processing performed in the injection molding system 1. Further, the notification may be performed through a mobile terminal or the like possessed by the user (for example, the user of the injection molding machine 2, and the administrator and the worker of the external device 4) of the injection molding system 1. In this case, information on the notification may be transmitted to the mobile terminal and may be notified to the user through the output unit (for example, a display, a speaker, or the like) provided in the mobile terminal.

For example, the control processing for the injection molding system 1 to perform the notification may be performed by the external device 4 or an injection molding machine 2 (control device 90) serving as the master machine. Further, as a premise of the notification, processing for determining (identify) the processing state of the injection molding system 1 may be performed by the external device 4 or the injection molding machine 2, that is, by a control side, or may be performed by the injection molding machine 2 (slave machine), that is, by a controlled side. Specifically, processing for determining the state of the internal processing of the injection molding machine 2, may be performed by the injection molding machine 2 (control device 90) . Moreover, the processing for determining the state of the internal processing of the external device 4 may be performed by the external device 4.

For example, the injection molding system 1 may perform the notification regarding the state of communication performed in the injection molding system 1 toward the outside, as in the case of the injection molding machine 2 (first example of the operation of the control device 90) described above. The state of communication of a notification target performed in the injection molding system 1 may include at least one of a state of communication performed inside the injection molding machine 2, a state of communication performed inside the external device 4, a state of communication between one injection molding machine 2 (master machine) and another injection molding machine 2 (slave machine), and a state of communication between the injection molding machine 2 and the external device 4. Specifically, the injection molding system 1 may perform a notification regarding the presence or absence of the abnormality in the communication performed in the injection molding system 1. As in the case of the injection molding machine 2 described above, the abnormality of the communication includes an abnormality in which the data synchronization is lost in the periodic data communication performed inside the injection molding machine 2, inside the external device 4, between one injection molding machine 2 (master machine) and another injection molding machine 2 (slave machine), between the injection molding machine 2 and the external device 4, or the like. Further, as in the case of the injection molding machine 2 described above, for example, the injection molding system 1 may notify the information on the setting state regarding the communication cycle, information on the presence or absence of the communication failure and an occurrence location thereof, information on the presence or absence of the communication delay and a degree thereof, or the like.

Further, for example, as in the case of the injection molding machine 2 described above, the injection molding system 1 may notify the outside of the load state of the entire processing or specific partial processing performed in the injection molding system 1.

Specifically, the injection molding system 1 may notify the user of information such as a numerical value or a graph representing the load state due to the entire processing or specific partial processing in the injection molding system 1. Further, for example, the injection molding system 1 may receive an operation input regarding addition of a new function or expansion of the current function from the user through the input unit provided in the external device 4 or the input unit 95 of the injection molding machine 2. In this case, the injection molding system 1 may determine whether or not it is possible to add a new function or expand the current function based on the current load state of the entire processing. Further, when the injection molding system 1 receives the expansion of a specific function, it may determine whether or not the expansion of the specific function is possible based on the load state of the processing regarding the specific function. Then, the injection molding system 1 may notify the user of the determination result. Further, for example, the injection molding system 1 may receive an operation input regarding setting of the operation condition (for example, a sampling cycle) that affects the processing load from the user through the input unit provided in the external device 4 or the input unit 95 of the injection molding machine 2. In this case, the injection molding system 1 may determine whether or not the new setting content requested by the user is established, that is, matches the maximum allowable load, based on the load state of the current entire processing or the specific processing of the setting target. Then, the injection molding system 1 may notify the user of the determination result.

For example, the injection molding system 1 needs to operate while coordinating processing performed inside the injection molding machine 2 of the control target, processing performed outside the injection molding machine 2, processing of communication between each other, and the like. Therefore, there is a possibility that the operation of the injection molding system 1 may fluctuate in an unstable direction due to a change in the processing state such as the load state of the processing and the communication state in the injection molding system 1. Therefore, there is a possibility that the injection molding system 1 fluctuates in an unstable direction due to subsequent changes/updates such as addition of new functions, expansion of current functions, and setting changes regarding operation conditions, and the operation cannot be established.

On the other hand, in this example, the injection molding system 1 performs the notification regarding the state of the processing in the injection molding system 1 toward the outside. As a result, the user can consider the subsequent changes/updates of the injection molding system 1 such as the addition of the new functions, the expansion of the current functions, and the setting changes regarding the operation conditions while confirming the content of the notification. Therefore, the injection molding system 1 can support the user so that the user stably changes/updates the injection molding system 1.

### <Second Example of Operation of Injection Molding System>

In this example, the injection molding system 1 may provide the user of information on implementation statuses of the setting and updating of the injection molding machine 2 through the external device 4 as in the case of the injection molding machine 2 (second example of the operation of the control device 90) described above. As described above, the external device 4 may include a user terminal such as a mobile terminal. As a result, the user of the external device 4 can identify the implementation status of the setting/updating in the injection molding machine 2.

Further, in place of or in addition to the external device 4, through the output unit 96 of one injection molding machine 2 (master machine), the injection molding system 1 may provide information on the implementation statuses of the setting and updating in another injection molding machine 2 (slave machine) to the user. As a result, the user (for example, the administrator) of the plurality of injection molding machine 2 can confirm the information on the implementation statuses of the setting and updating in other slave machines from the master machine. Hereinafter, since the same mode is used when information is provided through the external device 4 and when information is provided through one injection molding machine 2 (master machine), when the information is provided by the external device 4 will be mainly described.

When the parameter or the program regarding the predetermined processing is set or updated by the injection molding machine 2, the external device 4 may display the injection molding machine 2 being in the operation state related to the setting or updating of the parameter or program on the display unit provided in the external device 4. For example, the display unit is a liquid crystal display, an organic Electroluminescence (EL) display, or the like. Specifically, when the setting or updating of the parameter or program regarding the predetermined processing is performed, the injection molding machine 2 transmits a signal indicating the setting or updating to the external device 4, the external device 4 receives the signal, and thus, the operation state of the injection molding machine 2 is identified. As a result, the injection molding system 1 can cause the user of the external device 4 to recognize that the injection molding machine 2 is in the operation state regarding the setting/updating of the parameter or program.

Further, for example, the external device 4 may display the recorded log information indicating that the injection molding machine 2 has been set or updated in response to a predetermined input from the user on the display unit. The log information may be appropriately transmitted (uploaded) from the injection molding machine 2 to the external device 4. Further, the log information may be recorded by the external device 4. In this case, the injection molding machine 2 may transmit a signal including the content of the processing to the external device 4 when the processing regarding the setting or updating of the own machine is performed, and the external device 4 may receive the signal to record the log information. As a result, the injection molding system 1 can cause the user of the external device 4 to recognize the implementation status of the updating or setting of the injection molding machine 2. Specifically, the external device 4 may display the log information on the setting processing of the recorded parameter, the update processing of the parameter, the setting processing of the program, the update processing of the program, the start processing accompanied by the setting or updating, the ending processing accompanied by the setting or updating, or the like on the display unit in chronological order. For example, the external device 4 may display the log information on the display unit side by side in chronological order in a table format. As a result, the injection molding machine 2 can cause the user to recognize the implementation status of the updating or setting of the own machine in chronological order. Further, the external device 4 may display information on the implementation statuses of the setting and updating in the plurality of injection molding machine 2 in a simultaneously visible manner. Specifically, the external device 4 may display the log information of the plurality of injection molding machines 2 on the setting processing of the recorded parameter, the update processing of the parameter, the setting processing of the program, the update processing of the program, the start processing accompanied by the setting or updating, the ending processing accompanied by the setting or updating, or the like on the display unit in chronological order. Thus, a user (for example, administrator of the plurality of injection molding machines 2 or the like) of the external device 4 can easily identify the implementation status of the setting or updating of each of a plurality of injection molding machines 2.

As described above, in this example, the injection molding system 1 can notify the user of the implementation statuses of the setting and the updating in the injection molding machine 2 (slave machine) through the external device 4 or one injection molding machine 2 (master machine).

### [Modification and Alteration]

Hereinbefore, the embodiments are described in detail. However, the present invention is not limited to the embodiments or the like, and various modifications and changes are possible within a scope of the present invention described in claims.

For example, in the above-described embodiments, the first to fifth examples of the operation of the control device 90 of the injection molding machine 2 may be appropriately combined. That is, the control device 90 of the injection molding machine 2 may be in an aspect of performing at least one operation of the above-mentioned first to fifth examples.

Further, in the above-described embodiments and modifications, the operations of the control device 90 (controllers 90A to 90D and controllers 90F to 90J) that control the injection molding machine 2 are described. However, the same operations may be adopted to a control device (controller) that controls other predetermined machines (for example, an industrial machine, an industrial robot, or the like).

Further, in the above-described embodiments and modifications, for example, the specific operations (first example, second example, or the like) of the injection molding system 1 are described. However, the same operations may be applied to any system including a device of a control target (hereinafter, referred to as a "control target device") and a control device located outside (for example, a cloud server, an edge server, or the like) (hereinafter, referred to as an "external control device") that is communicably connected to the control target device and controls the control target device from the outside. For example, it may be applied to a system including a plurality of industrial machines and industrial robots installed in a factory and a management device for controlling the machines or robots from the outside. Further, for example, it may be applied to a system including a plurality of vehicles (automobiles) and a management device that controls (monitors) the vehicles from the outside. Further, for example, it may be applied to a power supply system including a power plant, a smart meter of a consumer that receives power supply, and a management device for controlling the power plant. In this case, the external control device controls the control target device based on information acquired by a device (for example, a sensor or the like) (hereinafter, referred to as an "information acquisition device") that acquires information on various states of the control target device. For example, the information acquisition device may be a sensor mounted on the control target device or the like, or a sensor or the like that monitors the control target device from the outside. In the former case, the external control device may acquire (receive) the information acquired by the information acquisition device from the control target device, and in the latter case, the external control device may be communicably connected to the information acquisition device to acquire (receive) information from the information acquisition device.

### Reference Signs List

- 1: injection molding system
- 2: injection molding machine (predetermined machine)
- 4: external device
- 10: mold clamping unit
- 12: stationary platen
- 13: movable platen
- 15: support platen
- 20: toggle mechanism
- 21: mold clamping motor
- 40: injection unit
- 41: cylinder
- 42: nozzle
- 43: screw
- 45: plasticizing motor
- 46: injection motor
- 47: pressure detector
- 50: ejector unit
- 51: ejector motor
- 52: motion conversion mechanism
- 53: ejector rod
- 90: control device
- 90A to 90D, 90F to 90J: controller
- 90E: driver
- 91, 91A, 91Aa, 91Ab, 91B: CPU (processor)
- 92: storage medium
- 92A: memory device
- 93: input interface
- 94: output interface
- 95: input unit
- 96: output unit (display unit)
- 97: storage device
- 98: power relay
- 99A, 99B: FPGA
- 991A, 991B: start trigger output unit
- 992A, 992B: counter
- 993A: counter latch unit
- 994B: transmission/reception unit
- 100: input device
- 101, 101A, 101B: encoder
- 102: AD converter

## Claims

1. An injection molding machine (2) comprising:
a mold clamping unit (10) configured to clamp a mold unit (30) ;
an injection unit (40) configured to fill the mold unit (30) clamped by the mold clamping unit (10) with a molding material;
an ejector unit (50) configured to eject a molding product from the mold unit (30) after the molding material filled by the injection unit (40) is cooled and solidified; and
a control device (90) configured to control the mold clamping unit (10), the injection unit (40), and the ejector unit (50),
**characterized in that**
the control device (90) is configured to conditionally continue a running operation of the injection molding machine (2) even when an abnormality regarding the control device (90) occurs,
wherein, when an abnormality occurs in the control device (90), whether to continue or stop a running operation of the injection molding machine (2) is different for each type of the abnormality.

2. The injection molding machine (2) according to claim 1,
wherein even when the abnormality regarding the control device (90) occurs, at least a series of running operations for manufacturing a molding product is completed.

3. The injection molding machine (2) according to claim 2,
wherein the series of operations includes operations regarding a mold closing process, a mold clamping process, and a mold opening process of the mold clamping unit (10), operations regarding a filling process, a holding pressure process, a cooling process, and a plasticizing process of the injection unit (40), and an operation regarding an ejection process of the ejector unit (50).

4. The injection molding machine (2) according to claim 2 or 3,
wherein when the abnormality regarding the control device (90) occurs, the series of operations stops after the series of operations is repeated by a number of times specified for each type of generated abnormality.

5. The injection molding machine (2) according to any one of claims 1 to 4,
wherein when the abnormality regarding the control device (90) occurs, whether the running operation continues or the running operation stops is made different depending on a type of the abnormality that has occurred.

6. The injection molding machine (2) according to claim 5,
wherein in response to a predetermined input, for each type of the abnormality regarding the control device (90), whether to continue or stop the operation when the abnormality occurs is set.

7. The injection molding machine (2) according to claim 5 or 6,
wherein when a predetermined abnormality regarding the control device (90) occurs, the running operation stops and at least one of notifying a user of the abnormality and recording predetermined information when the predetermined abnormality occurs is performed.

8. The injection molding machine (2) according to claim 5 or 6,
wherein when a predetermined abnormality regarding the control device (90) occurs, the running operation temporarily stops to perform self-diagnosis, and when there is no problem in a diagnosis result, the operation is restarted.

9. The injection molding machine (2) according to any one of claims 1 to 8,
wherein when the abnormality regarding the control device (90) occurs, self-diagnosis is performed while the running operation is continued, and when there is no problem in a diagnosis result, the running operation is continued as it is.

10. The injection molding machine (2) according to any one of claims 1 to 9,
wherein the control device (90) includes a plurality of controllers connected hierarchically, and
even when an abnormality occurs in one of the plurality of controllers, a controller hierarchically lower than the one controller among the plurality of controllers continues the running operation.

11. The injection molding machine (2) according to claim 10,
wherein a high-order controller (90F) of two controllers (90F, 90G) having adjacent hierarchies included in the plurality of controllers transmits a predetermined signal to a low-order controller (90G) of the two controllers (90F, 90G) for each predetermined communication cycle, and
the low-order controller (90G) repeats predetermined processing at a predetermined processing cycle and corrects an interrupt timing of the processing cycle step by step to synchronize a reception timing of the predetermined signal with the interrupt timing of the processing cycle.

12. The injection molding machine (2) according to claim 11,
wherein the low-order controller (90G) repeats the predetermined processing for each processing cycle shorter than the communication cycle, and corrects the interrupt timing for each processing cycle to synchronize the reception timing of the predetermined signal with the interrupt timing of the processing cycle.

13. The injection molding machine (2) according to claim 11 or 12,
wherein the low-order controller (90G) limits a correction amount when correcting the interrupt timing for each processing cycle to a predetermined allowable width or less.

14. The injection molding machine (2) according to claim 11,
wherein when a deviation amount between the reception timing of the predetermined signal and the interrupt timing of the processing cycle is relatively large, the low-order controller (90G) corrects the interrupt timing of the processing cycle step by step to synchronize the reception timing of the predetermined signal with the interrupt timing of the processing cycle.

## Patentansprüche

1. Spritzgießmaschine (2), umfassend:
eine Formschließ-/klemmeinheit (10), die konfiguriert ist, eine Formeinheit (30) zu klemmen;
eine Einspritzeinheit (40), die konfiguriert ist, die von der Formschließ-/klemmeinheit (10) geklemmte Formeinheit (30) mit einem Formmaterial zu befüllen;
eine Auswerfereinheit (50), die konfiguriert ist, ein Formprodukt aus der Formeinheit (30) auszuwerfen, nachdem das von der Einspritzeinheit (40) eingefüllte Formmaterial gekühlt und verfestigt ist; und
eine Steuervorrichtung (90), die konfiguriert ist, die Formschließ-/klemmeinheit (10), die Einspritzeinheit (40) und die Auswerfereinheit (50) zu steuern,
**dadurch gekennzeichnet, dass**
die Steuervorrichtung (90) konfiguriert ist, einen laufenden Vorgang der Spritzgießmaschine (2) bedingt fortzusetzen, selbst wenn eine Abnormalität bezüglich der Steuervorrichtung (90) auftritt,
wobei, wenn eine Abnormalität in der Steuervorrichtung (90) auftritt, ob ein laufender Vorgang der Spritzgießmaschine (2) fortgesetzt oder gestoppt werden soll, für jeden Typ der Abnormalität unterschiedlich ist.

2. Spritzgießmaschine (2) nach Anspruch 1,
wobei, selbst wenn die Abnormalität bezüglich der Steuervorrichtung (90) auftritt, zumindest eine Reihe von laufenden Vorgängen zur Herstellung eines Formprodukts abgeschlossen wird.

3. Spritzgießmaschine (2) nach Anspruch 2,
wobei die Reihe von Vorgängen Vorgänge bezüglich eines Formschließprozesses, eines Formklemmprozesses und eines Formöffnungsprozesses der Formschließ-/klemmeinheit (10), Vorgänge bezüglich eines Füllprozesses, eines Druckhalteprozesses, eines Kühlprozesses und eines Plastifizierungsprozesses der Einspritzeinheit (40) und einen Vorgang bezüglich eines Auswurfprozesses der Auswerfereinheit (50) umfasst.

4. Spritzgießmaschine (2) nach Anspruch 2 oder 3,
wobei, wenn die Abnormalität bezüglich der Steuervorrichtung (90) auftritt, die Reihe von Vorgängen gestoppt wird, nachdem die Reihe von Vorgängen mehrfach wiederholt wird, die für jede Art von erzeugter Abnormalität spezifiziert ist.

5. Spritzgießmaschine (2) nach einem der Ansprüche 1 bis 4,
wobei, wenn die Abnormalität bezüglich der Steuervorrichtung (90) auftritt, ob der laufende Vorgang fortgesetzt oder der laufende Vorgang gestoppt wird, abhängig von der Art der aufgetretenen Abnormalität unterschiedlich ausfällt.

6. Spritzgießmaschine (2) nach Anspruch 5,
wobei als Reaktion auf eine vorbestimmte Eingabe für jede Art der Abnormalität bezüglich der Steuervorrichtung (90) eingestellt wird, ob der Vorgang fortgesetzt oder gestoppt werden soll, wenn die Abnormalität auftritt.

7. Spritzgießmaschine (2) nach Anspruch 5 oder 6,
wobei, wenn eine vorbestimmte Abnormalität bezüglich der Steuervorrichtung (90) auftritt, der laufende Vorgang gestoppt wird und mindestens eines von einer Benachrichtigung eines Benutzers über die Abnormalität und einer Aufzeichnung vorbestimmter Information durchgeführt wird, wenn die vorbestimmte Abnormalität auftritt.

8. Spritzgießmaschine (2) nach Anspruch 5 oder 6,
wobei, wenn eine vorbestimmte Abnormalität bezüglich der Steuervorrichtung (90) auftritt, der laufende Vorgang vorübergehend gestoppt wird, um Selbstdiagnose durchzuführen, und wenn es kein Problem in einem Diagnoseergebnis gibt, wird der Vorgang wieder aufgenommen.

9. Spritzgießmaschine (2) nach einem der Ansprüche 1 bis 8,
wobei, wenn die Abnormalität bezüglich der Steuervorrichtung (90) auftritt, Selbstdiagnose durchgeführt wird, während der laufende Vorgang fortgesetzt wird, und wenn es kein Problem in einem Diagnoseergebnis gibt, wird der laufende Vorgang fortgesetzt, wie er ist.

10. Spritzgießmaschine (2) nach einem der Ansprüche 1 bis 9,
wobei die Steuervorrichtung (90) mehrere hierarchisch verbundene Steuerungen umfasst, und
selbst wenn eine Abnormalität in einer der mehreren Steuerungen auftritt, eine Steuerung, die hierarchisch niedriger als die eine Steuerung unter den mehreren Steuerungen ist, den laufenden Vorgang fortsetzt.

11. Spritzgießmaschine (2) nach Anspruch 10,
wobei eine Steuerung höherer Ordnung (90F) von zwei Steuerungen (90F, 90G) mit benachbarten Hierarchien, die in den mehreren Steuerungen enthalten sind, ein vorbestimmtes Signal an eine Steuerung (90G) niedriger Ordnung der zwei Steuerungen (90F, 90G) für jeden vorbestimmten Kommunikationszyklus sendet, und
die Steuerung (90G) niedriger Ordnung eine vorbestimmte Verarbeitung in einem vorbestimmten Verarbeitungszyklus wiederholt und einen Unterbrechungszeitpunkt des Verarbeitungszyklus Schritt für Schritt korrigiert, um einen Empfangszeitpunkt des vorbestimmten Signals mit dem Unterbrechungszeitpunkt des Verarbeitungszyklus zu synchronisieren.

12. Spritzgießmaschine (2) nach Anspruch 11,
wobei die Steuerung (90G) niedriger Ordnung die vorbestimmte Verarbeitung für jeden Verarbeitungszyklus, der kürzer als der Kommunikationszyklus ist, wiederholt und den Unterbrechungszeitpunkt für jeden Verarbeitungszyklus korrigiert, um den Empfangszeitpunkt des vorbestimmten Signals mit dem Unterbrechungszeitpunkt des Verarbeitungszyklus zu synchronisieren.

13. Spritzgießmaschine (2) nach Anspruch 11 oder 12,
wobei die Steuerung (90G) niedriger Ordnung einen Korrekturbetrag bei Korrektur des Unterbrechungszeitpunkts für jeden Verarbeitungszyklus auf eine vorbestimmte zulässige Breite oder weniger begrenzt.

14. Spritzgießmaschine (2) nach Anspruch 11,
wobei, wenn ein Abweichungsbetrag zwischen dem Empfangszeitpunkt des vorbestimmten Signals und dem Unterbrechungszeitpunkt des Verarbeitungszyklus relativ groß ist, die Steuerung (90G) niedriger Ordnung den Unterbrechungszeitpunkt des Verarbeitungszyklus Schritt für Schritt korrigiert, um den Empfangszeitpunkt des vorbestimmten Signals mit dem Unterbrechungszeitpunkt des Verarbeitungszyklus zu synchronisieren.

## Revendications

1. Une machine de moulage par injection (2) comprenant :
une unité de serrage de moule (10) configurée pour serrer une unité de moule (30) ;
une unité d'injection (40) configurée pour remplir l'unité de moule (30) serrée par l'unité de serrage de moule (10) avec un matériau de moulage ;
une unité d'éjection (50) configurée pour éjecter un produit de moulage de l'unité de moule (30) après que le matériau de moulage introduit par l'unité d'injection (40) est refroidi et solidifié ; et
un dispositif de commande (90) configuré pour commander l'unité de serrage de moule (10), l'unité d'injection (40) et l'unité d'éjection (50),
**caractérisée en ce que**
le dispositif de commande (90) est configuré pour poursuivre sous condition une opération en cours d'exécution de la machine de moulage par injection (2) même lorsqu'une anomalie concernant le dispositif de commande (90) se produit,
dans laquelle, lorsqu'une anomalie se produit dans le dispositif de commande (90), le choix de poursuivre ou d'arrêter une opération en cours d'exécution de la machine de moulage par injection (2) diffère pour chaque type de l'anomalie.

2. La machine de moulage par injection (2) selon la revendication 1,
dans laquelle même lorsque l'anomalie concernant le dispositif de commande (90) se produit, au moins une série d'opérations en cours d'exécution pour la fabrication d'un produit de moulage est achevée.

3. La machine de moulage par injection (2) selon la revendication 2,
dans laquelle la série d'opérations inclut des opérations concernant un processus de fermeture de moule, un processus de serrage de moule et un processus d'ouverture de moule de l'unité de serrage de moule (10), des opérations concernant un processus de remplissage, un processus de maintien de pression, un processus de refroidissement et un processus de plastification de l'unité d'injection (40), et une opération concernant un processus d'éjection de l'unité d'éjection (50).

4. La machine de moulage par injection (2) selon la revendication 2 ou 3,
dans laquelle lorsque l'anomalie concernant le dispositif de commande (90) se produit, la série d'opérations s'arrête après que la série d'opérations est répétée un nombre de fois spécifié pour chaque type d'anomalie générée.

5. La machine de moulage par injection (2) selon l'une quelconque des revendications 1 à 4,
dans laquelle lorsque l'anomalie concernant le dispositif de commande (90) se produit, le choix de poursuivre ou d'arrêter l'opération en cours d'exécution diffère en fonction d'un type de l'anomalie qui s'est produite.

6. La machine de moulage par injection (2) selon la revendication 5,
dans laquelle en réponse à une entrée prédéterminée, pour chaque type de l'anomalie concernant le dispositif de commande (90), le choix de poursuivre ou d'arrêter l'opération lorsque l'anomalie se produit est défini.

7. La machine de moulage par injection (2) selon la revendication 5 ou 6,
dans laquelle lorsqu'une anomalie prédéterminée concernant le dispositif de commande (90) se produit, l'opération en cours d'exécution s'arrête et au moins l'un d'une notification à un utilisateur de l'anomalie et de l'enregistrement d'informations prédéterminées lorsque l'anomalie prédéterminée se produit est réalisé.

8. La machine de moulage par injection (2) selon la revendication 5 ou 6,
dans laquelle lorsqu'une anomalie prédéterminée concernant le dispositif de commande (90) se produit, l'opération en cours d'exécution s'arrête provisoirement pour réaliser un autodiagnostic, et en l'absence de problème dans un résultat de diagnostic, l'opération est redémarrée.

9. La machine de moulage par injection (2) selon l'une quelconque des revendications 1 à 8,
dans laquelle lorsque l'anomalie concernant le dispositif de commande (90) se produit, un autodiagnostic est réalisé alors que l'opération en cours d'exécution se poursuit, et en l'absence de problème dans un résultat de diagnostic, l'opération en cours d'exécution se poursuit telle qu'elle est.

10. La machine de moulage par injection (2) selon l'une quelconque des revendications 1 à 9,
dans laquelle le dispositif de commande (90) inclut une pluralité d'unités de commande connectées hiérarchiquement, et
même lorsqu'une anomalie se produit dans une de la pluralité d'unités de commande, une unité de commande hiérarchiquement inférieure à l'unité de commande en question parmi la pluralité d'unités de commande poursuit l'opération en cours d'exécution.

11. La machine de moulage par injection (2) selon la revendication 10,
dans laquelle une unité de commande d'ordre supérieur (90F) entre deux unités de commande (90F, 90G) ayant des hiérarchies voisines incluses dans la pluralité d'unités de commande transmet un signal prédéterminé à une unité de commande d'ordre inférieur (90G) entre les deux unités de commande (90F, 90G) pour chaque cycle de communication prédéterminé, et
l'unité de commande d'ordre inférieur (90G) répète un traitement prédéterminé lors d'un cycle de traitement prédéterminé et corrige un moment d'interruption du cycle de traitement pas à pas pour synchroniser un moment de réception du signal prédéterminé avec le moment d'interruption du cycle de traitement.

12. La machine de moulage par injection (2) selon la revendication 11,
dans laquelle l'unité de commande d'ordre inférieur (90G) répète le traitement prédéterminé pour chaque cycle de traitement plus court que le cycle de communication, et corrige le moment d'interruption pour chaque cycle de traitement pour synchroniser le moment de réception du signal prédéterminé avec le moment d'interruption du cycle de traitement.

13. La machine de moulage par injection (2) selon la revendication 11 ou 12,
dans laquelle l'unité de commande d'ordre inférieur (90G) limite une quantité de correction lors de la correction du moment d'interruption pour chaque cycle de traitement à une largeur permise prédéterminée ou moins.

14. La machine de moulage par injection (2) selon la revendication 11,
dans laquelle lorsqu'une quantité de déviation entre le moment de réception du signal prédéterminé, et le moment d'interruption du cycle de traitement est relativement grande, l'unité de commande d'ordre inférieur (90G) corrige le moment d'interruption du cycle de traitement pas à pas pour synchroniser le moment de réception du signal prédéterminé avec le moment d'interruption du cycle de traitement.
